# EUROPEAN PATENT APPLICATION

(11) **EP 4 665 039 A1**
(43) Date of publication of application: **17.12.2025**
(21) Application number: 23922389.4
(22) Date of filing: 10.11.2023
(51) Int. Cl.: H04W 72/0446

(54) **TRANSMISSION INDICATION METHOD, APPARATUS, AND SYSTEM**

(30) Priority: 17.02.2023 CN 202310153878
(71) Applicant: Huawei Technologies Co., Ltd., Shenzhen, Guangdong 518129 (CN)
(72) Inventor: LI, Jun, Shenzhen, Guangdong 518129 (CN); JIAO, Shurong, Shenzhen, Guangdong 518129 (CN)
(74) Representative: Gill Jennings & Every LLP
(86) International application number: PCT/CN2023/130964
(87) International publication number: WO 2024/169273

(57) **Abstract**

Embodiments of this application provide a transmission indication method, an apparatus, and a system, to improve sending and receiving performance of a terminal device in different types of time units. The method includes: The terminal device receives a first message from a network device, where the first message indicates quasi co-location QCL configuration information associated with a type of a time unit for physical channel transmission, the physical channel transmission includes at least one of transmission of a physical uplink channel and transmission of a physical downlink channel, and the type of the time unit includes a type used only for physical uplink transmission, a type used only for physical downlink transmission, and a type used for physical uplink transmission and physical downlink transmission. The terminal device performs the physical channel transmission in the time unit of the associated type based on the QCL configuration information.

## Description

This application claims priority to Chinese Patent Application No. 202310153878.8, filed with the China National Intellectual Property Administration on February 17, 2023 and entitled "TRANSMISSION INDICATION METHOD, APPARATUS, AND SYSTEM", which is incorporated herein by reference in its entirety.

### TECHNICAL FIELD

This application relates to the field of communication technologies, and in particular, to a transmission indication method, an apparatus, and a system.

### BACKGROUND

In a time division duplex (time division duplex, TDD) technology, one slot (slot) is used only for uplink (uplink, UL) transmission or downlink (downlink, DL) transmission. When there is a UL transmission requirement, UL transmission usually cannot be implemented immediately, and needs to wait for a slot used for the UL transmission. This increases a delay of the UL transmission. To resolve this problem, a subband full duplex (subband full duplex, SBFD) technology is introduced into a communication standard. A slot that can be used for UL transmission and DL transmission simultaneously is referred to as an SBFD slot, and a slot that can be used only for UL transmission or DL transmission is referred to as a non-SBFD slot. In an SBFD slot, UL transmission and DL transmission occupy different frequency domain resources.

Currently, in the TDD technology, a physical downlink channel is used as an example. A network device may send a transmission configuration indicator (transmission configuration indicator, TCI) state (state) to a terminal device in advance. The TCI state includes an identifier (identity, ID) of a reference signal associated with the physical downlink channel. That the physical downlink channel is associated with the reference signal means that large-scale properties of a channel for transmission of the physical downlink channel may be deduced from a channel for transmission of the reference signal.

In the TDD technology, on a network device side, an antenna used for transmission of a physical downlink channel is fixed. However, in the SBFD technology, on a network device side, to implement uplink transmission and downlink transmission simultaneously in an SBFD slot, using a physical downlink channel as an example, some antennas that are originally used for downlink transmission in a non-SBFD slot may be used for uplink transmission in the SBFD slot. The physical downlink channel in the SBFD slot and the physical downlink channel in the non-SBFD slot may be implemented by different antennas. Correspondingly, beams and/or channels sent by a network device in the SBFD slot and the non-SBFD slot may also be different. If a transmission indication method in the TDD technology is used, receiving performance deteriorates when a terminal device receives different beams and/or channels.

### SUMMARY

Embodiments of this application provide a transmission indication method, an apparatus, and a system, to improve sending and receiving performance of a terminal device in different types of time units.

To achieve the foregoing objective, the following technical solutions are used in embodiments of this application.

According to a first aspect, a transmission indication method is provided. An apparatus for performing the transmission indication method may be a terminal device, or may be a module, for example, a chip or a chip system, used in the terminal device. The following uses an example in which an execution body is the terminal device for description. The terminal device receives a first message from a network device, where the first message indicates quasi co-location QCL configuration information associated with a type of a time unit for physical channel transmission, the physical channel transmission includes at least one of transmission of a physical uplink channel and transmission of a physical downlink channel, and the type of the time unit includes a type used only for physical uplink transmission, a type used only for physical downlink transmission, and a type used for physical uplink transmission and physical downlink transmission. The terminal device performs the physical channel transmission in the time unit of the associated type based on the QCL configuration information.

In the transmission indication method provided in this embodiment of this application, the QCL configuration information indicated in the first message is associated with the type of the time unit for the physical channel transmission. In other words, QCL configuration information used by the terminal device to perform the physical channel transmission in different types of time units may be different. On a network device side, antennas used for the physical channel transmission in different types of time units may be different, and corresponding transmit beams of the network device or beams that can be received by the network device are also different. Therefore, to adapt to antenna or beam changes on the network device side in different types of time units, the terminal device performs the physical channel transmission in different types of time units by using different QCL configuration information, so that receiving and/or sending performance of the terminal device can be improved.

With reference to the first aspect, in a possible implementation, the first message further indicates a reference signal associated with the QCL configuration information. In this solution, the first message may include an identifier of the reference signal associated with the QCL configuration information, to indicate the reference signal associated with the QCL configuration information.

With reference to the first aspect, in a possible implementation, when the physical downlink channel is a physical downlink control channel PDCCH, the first message is a medium access control MAC layer message.

With reference to the first aspect, in a possible implementation, when the physical downlink channel is a physical downlink shared channel PDSCH, or when the physical uplink channel is a physical uplink shared channel PUSCH or a physical uplink control channel PUCCH, the first message is downlink control information DCI; and the method further includes: The terminal device receives a second message from the network device, where the second message is used to configure a plurality of pieces of QCL configuration information based on the type of the time unit, and the first message specifically indicates, from the plurality of pieces of QCL configuration information, the QCL configuration information associated with the type of the time unit in which the physical channel transmission is currently performed. In this solution, the plurality of pieces of QCL configuration information may be preconfigured based on the type of the time unit, and the QCL configuration information associated with the type of the time unit in which the physical channel transmission is currently performed is selected from the plurality of pieces of QCL configuration information based on an actual requirement. This can increase an application scope and flexibility of the solution.

With reference to the first aspect, in a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type. In this solution, a slot including both the symbol of the first type and the symbol of the second type may be classified as a slot of the first type, or may be classified as a slot of the second type. This is not limited in embodiments of this application.

With reference to the first aspect, in a possible implementation, the first message further includes first indication information, and the first indication information indicates a type of a time unit that the reference signal is in. In this solution, the reference signal indicated by the first message may be simultaneously in different types of time units. The first indication information may clearly indicate which type of time unit that the reference signal associated with the physical channel transmission is in.

With reference to the first aspect, in a possible implementation, the first indication information specifically indicates that the type of the time unit that the reference signal is in is the same as the type of the time unit for the physical channel transmission.

According to a second aspect, a transmission indication method is provided. An apparatus for performing the transmission indication method may be a terminal device, or may be a module, for example, a chip or a chip system, used in the terminal device. The following uses an example in which an execution body is the terminal device for description. The terminal device receives a first message from a network device, where the first message indicates quasi co-location QCL configuration information associated with a type of a time unit for physical signal transmission, the physical signal transmission includes at least one of transmission of a physical uplink signal and transmission of a physical downlink signal, and the type of the time unit includes a type used only for physical uplink transmission, a type used only for physical downlink transmission, and a type used for physical uplink transmission and physical downlink transmission. The terminal device performs the physical signal transmission in the time unit of the associated type based on the QCL configuration information.

In the transmission indication method provided in this embodiment of this application, the QCL configuration information indicated in the first message is associated with the type of the time unit for the physical signal transmission. In other words, QCL configuration information used by the terminal device to perform the physical signal transmission in different types of time units may be different. On a network device side, antennas used for the physical signal transmission in different types of time units may be different, and corresponding transmit beams of the network device or beams that can be received by the network device are also different. Therefore, to adapt to antenna or beam changes on the network device side in different types of time units, the terminal device performs the physical signal transmission in different types of time units by using different QCL configuration information, so that receiving and/or sending performance of the terminal device can be improved.

With reference to the second aspect, in a possible implementation, the method further includes: The terminal device receives second indication information from the network device, where the second indication information indicates that the physical signal transmission in different types of time units is performed through different antenna ports of the network device. For example, a physical signal may be a TRS. Because antenna ports used by the network device to send the TRS in different types of time units are different, the terminal device may receive the TRS on the different antenna ports by using different QCL configuration information, to improve time-frequency tracking performance of the terminal device.

With reference to the second aspect, in a possible implementation, the first message further indicates a reference signal associated with the QCL configuration information. In this solution, the first message may include an identifier of the reference signal associated with the QCL configuration information, to indicate the reference signal associated with the QCL configuration information.

With reference to the second aspect, in a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type. In this solution, a slot including both the symbol of the first type and the symbol of the second type may be classified as a slot of the first type, or may be classified as a slot of the second type. This is not limited in embodiments of this application.

With reference to the second aspect, in a possible implementation, the first message further includes first indication information, and the first indication information indicates a type of a time unit that the reference signal is in. In this solution, the reference signal indicated by the first message may be simultaneously in different types of time units. The first indication information may clearly indicate which type of time unit that a reference signal associated with a physical channel transmission is in.

With reference to the second aspect, in a possible implementation, the first indication information specifically indicates that the type of the time unit that the reference signal is in is the same as the type of the time unit for the physical signal transmission.

According to a third aspect, a transmission indication method is provided. An apparatus for performing the transmission indication method may be a network device, or may be a module, for example, a chip or a chip system, used in the network device. The following uses an example in which an execution body is the network device for description. The network device sends a first message to a terminal device, where the first message indicates quasi co-location QCL configuration information associated with a type of a time unit for physical channel transmission, the physical channel transmission includes at least one of transmission of a physical uplink channel and transmission of a physical downlink channel, and the type of the time unit includes a type used only for physical uplink transmission, a type used only for physical downlink transmission, and a type used for physical uplink transmission and physical downlink transmission. The network device performs the physical channel transmission in the time unit of the associated type based on the QCL configuration information.

With reference to the third aspect, in a possible implementation, the first message further indicates a reference signal associated with the QCL configuration information.

With reference to the third aspect, in a possible implementation, when the physical downlink channel is a physical downlink control channel PDCCH, the first message is a medium access control MAC layer message.

With reference to the third aspect, in a possible implementation, when the physical downlink channel is a physical downlink shared channel PDSCH, or when the physical uplink channel is a physical uplink shared channel PUSCH or a physical uplink control channel PUCCH, the first message is downlink control information DCI; and the method further includes: The network device sends a second message to the terminal device, where the second message is used to configure a plurality of pieces of QCL configuration information based on the type of the time unit, and the first message specifically indicates, from the plurality of pieces of QCL configuration information, the QCL configuration information associated with the type of the time unit in which the physical channel transmission is currently performed.

With reference to the third aspect, in a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type.

With reference to the third aspect, in a possible implementation, the first message further includes first indication information, and the first indication information indicates a type of a time unit that the reference signal is in.

With reference to the third aspect, in a possible implementation, the first indication information specifically indicates that the type of the time unit that the reference signal is in is the same as the type of the time unit for the physical channel transmission.

For technical effects brought by any one of the possible implementations of the third aspect, refer to the technical effects brought by the first aspect or the different implementations of the first aspect. Details are not described herein again.

According to a fourth aspect, a transmission indication method is provided. An apparatus for performing the transmission indication method may be a network device, or may be a module, for example, a chip or a chip system, used in the network device. The following uses an example in which an execution body is the network device for description. The network device sends a first message to a terminal device, where the first message indicates quasi co-location QCL configuration information associated with a type of a time unit for physical signal transmission, the physical signal transmission includes at least one of transmission of a physical uplink signal and transmission of a physical downlink signal, and the type of the time unit includes a type used only for physical uplink transmission, a type used only for physical downlink transmission, and a type used for physical uplink transmission and physical downlink transmission. The network device performs the physical signal transmission in the time unit of the associated type based on the QCL configuration information.

With reference to the fourth aspect, in a possible implementation, the method further includes: The network device sends second indication information to the terminal device, where the second indication information indicates that the physical signal transmission in different types of time units is performed through different antenna ports of the network device.

With reference to the fourth aspect, in a possible implementation, the first message further indicates a reference signal associated with the QCL configuration information.

With reference to the fourth aspect, in a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type.

With reference to the fourth aspect, in a possible implementation, the first message further includes first indication information, and the first indication information indicates a type of a time unit that the reference signal is in.

With reference to the fourth aspect, in a possible implementation, the first indication information specifically indicates that the type of the time unit that the reference signal is in is the same as the type of the time unit for the physical signal transmission.

For technical effects brought by any one of the possible implementations of the fourth aspect, refer to the technical effects brought by the second aspect or the different implementations of the second aspect. Details are not described herein again.

According to a fifth aspect, a communication apparatus is provided, to implement the foregoing methods. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the fifth aspect, in a possible implementation, the communication apparatus includes a sending module and a receiving module. The receiving module is configured to receive a first message from a network device, where the first message indicates quasi co-location QCL configuration information associated with a type of a time unit for physical channel transmission, the physical channel transmission includes at least one of transmission of a physical uplink channel and transmission of a physical downlink channel, and the type of the time unit includes a type used only for physical uplink transmission, a type used only for physical downlink transmission, and a type used for physical uplink transmission and physical downlink transmission. The sending module and/or the receiving module are/is configured to perform the physical channel transmission in the time unit of the associated type based on the QCL configuration information.

With reference to the fifth aspect, in a possible implementation, the first message further indicates a reference signal associated with the QCL configuration information.

With reference to the fifth aspect, in a possible implementation, when the physical downlink channel is a physical downlink control channel PDCCH, the first message is a medium access control MAC layer message.

With reference to the fifth aspect, in a possible implementation, when the physical downlink channel is a physical downlink shared channel PDSCH, or when the physical uplink channel is a physical uplink shared channel PUSCH or a physical uplink control channel PUCCH, the first message is downlink control information DCI; and the receiving module is further configured to receive a second message from the network device, where the second message is used to configure a plurality of pieces of QCL configuration information based on the type of the time unit, and the first message specifically indicates, from the plurality of pieces of QCL configuration information, the QCL configuration information associated with the type of the time unit in which the physical channel transmission is currently performed.

With reference to the fifth aspect, in a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type.

With reference to the fifth aspect, in a possible implementation, the first message further includes first indication information, and the first indication information indicates a type of a time unit that the reference signal is in.

With reference to the fifth aspect, in a possible implementation, the first indication information specifically indicates that the type of the time unit that the reference signal is in is the same as the type of the time unit for the physical signal transmission.

For technical effects brought by any one of the possible implementations of the fifth aspect, refer to the technical effects brought by the first aspect or the different implementations of the first aspect. Details are not described herein again.

According to a sixth aspect, a communication apparatus is provided, to implement the foregoing methods. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the sixth aspect, in a possible implementation, the communication apparatus includes a sending module and a receiving module. The receiving module is configured to receive a first message from a network device, where the first message indicates quasi co-location QCL configuration information associated with a type of a time unit for physical signal transmission, the physical signal transmission includes at least one of transmission of a physical uplink signal and transmission of a physical downlink signal, and the type of the time unit includes a type used only for physical uplink transmission, a type used only for physical downlink transmission, and a type used for physical uplink transmission and physical downlink transmission. The sending module and/or the receiving module are/is configured to perform the physical signal transmission in the time unit of the associated type based on the QCL configuration information.

With reference to the sixth aspect, in a possible implementation, the receiving module is further configured to receive second indication information from the network device, where the second indication information indicates that the physical signal transmission in different types of time units is performed through different antenna ports of the network device.

With reference to the sixth aspect, in a possible implementation, the first message further indicates a reference signal associated with the QCL configuration information.

With reference to the sixth aspect, in a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type.

With reference to the sixth aspect, in a possible implementation, the first message further includes first indication information, and the first indication information indicates a type of a time unit that the reference signal is in.

With reference to the sixth aspect, in a possible implementation, the first indication information specifically indicates that the type of the time unit that the reference signal is in is the same as the type of the time unit for the physical signal transmission.

For technical effects brought by any one of the possible implementations of the sixth aspect, refer to the technical effects brought by the second aspect or the different implementations of the second aspect. Details are not described herein again.

According to a seventh aspect, a communication apparatus is provided, to implement the foregoing methods. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the seventh aspect, in a possible implementation, the communication apparatus includes a sending module and a receiving module. The sending module is configured to send a first message to a terminal device, where the first message indicates quasi co-location QCL configuration information associated with a type of a time unit for physical channel transmission, the physical channel transmission includes at least one of transmission of a physical uplink channel and transmission of a physical downlink channel, and the type of the time unit includes a type used only for physical uplink transmission, a type used only for physical downlink transmission, and a type used for physical uplink transmission and physical downlink transmission. The sending module and/or the receiving module are/is configured to perform the physical channel transmission in the time unit of the associated type based on the QCL configuration information.

With reference to the seventh aspect, in a possible implementation, the first message further indicates a reference signal associated with the QCL configuration information.

With reference to the seventh aspect, in a possible implementation, when the physical downlink channel is a physical downlink control channel PDCCH, the first message is a medium access control MAC layer message.

With reference to the seventh aspect, in a possible implementation, when the physical downlink channel is a physical downlink shared channel PDSCH, or when the physical uplink channel is a physical uplink shared channel PUSCH or a physical uplink control channel PUCCH, the first message is downlink control information DCI; and the sending module is further configured to send a second message to the terminal device, where the second message is used to configure a plurality of pieces of QCL configuration information based on the type of the time unit, and the first message specifically indicates, from the plurality of pieces of QCL configuration information, the QCL configuration information associated with the type of the time unit in which the physical channel transmission is currently performed.

With reference to the seventh aspect, in a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type.

With reference to the seventh aspect, in a possible implementation, the first message further includes first indication information, and the first indication information indicates a type of a time unit that the reference signal is in.

With reference to the seventh aspect, in a possible implementation, the first indication information specifically indicates that the type of the time unit that the reference signal is in is the same as the type of the time unit for the physical channel transmission.

For technical effects brought by any one of the possible implementations of the seventh aspect, refer to the technical effects brought by the first aspect or the different implementations of the first aspect. Details are not described herein again.

According to an eighth aspect, a communication apparatus is provided, to implement the foregoing methods. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the eighth aspect, in a possible implementation, the communication apparatus includes a sending module and a receiving module. The sending module is configured to send a first message to a terminal device, where the first message indicates quasi co-location QCL configuration information associated with a type of a time unit for physical signal transmission, the physical signal transmission includes at least one of transmission of a physical uplink signal and transmission of a physical downlink signal, and the type of the time unit includes a type used only for physical uplink transmission, a type used only for physical downlink transmission, and a type used for physical uplink transmission and physical downlink transmission. The sending module and/or the receiving module are/is configured to perform the physical signal transmission in the time unit of the associated type based on the QCL configuration information.

With reference to the eighth aspect, in a possible implementation, the sending module is further configured to send second indication information to the terminal device, where the second indication information indicates that the physical signal transmission in different types of time units is performed through different antenna ports of the network device.

With reference to the eighth aspect, in a possible implementation, the first message further indicates a reference signal associated with the QCL configuration information.

With reference to the eighth aspect, in a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type.

With reference to the eighth aspect, in a possible implementation, the first message further includes first indication information, and the first indication information indicates a type of a time unit that the reference signal is in.

With reference to the eighth aspect, in a possible implementation, the first indication information specifically indicates that the type of the time unit that the reference signal is in is the same as the type of the time unit for the physical signal transmission.

For technical effects brought by any one of the possible implementations of the eighth aspect, refer to the technical effects brought by the second aspect or the different implementations of the second aspect. Details are not described herein again.

According to a ninth aspect, a communication system is provided, including: a terminal device that performs the method according to the first aspect, and a network device that performs the method according to the third aspect; or a terminal device that performs the method according to the second aspect, and a network device that performs the method according to the fourth aspect.

According to a tenth aspect, a communication apparatus is provided, including a processor. The processor is configured to: after being coupled to a memory and reading computer instructions stored in the memory, perform, according to the instructions, the method according to the first aspect or the second aspect.

With reference to the tenth aspect, in a possible implementation, the communication apparatus further includes the memory. The memory is configured to store the computer instructions.

With reference to the tenth aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, a related circuit, or the like.

With reference to the tenth aspect, in a possible implementation, the communication apparatus may be a chip or a chip system. When the communication apparatus is the chip system, the communication apparatus may include a chip, or may include a chip and another discrete device.

With reference to the tenth aspect, in a possible implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eleventh aspect, a communication apparatus is provided, including a processor. The processor is configured to: after being coupled to a memory and reading computer instructions stored in the memory, perform, according to the instructions, the method according to the third aspect or the fourth aspect.

With reference to the eleventh aspect, in a possible implementation, the communication apparatus further includes the memory. The memory is configured to store the computer instructions.

With reference to the eleventh aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, a related circuit, or the like.

With reference to the eleventh aspect, in a possible implementation, the communication apparatus may be a chip or a chip system. When the communication apparatus is the chip system, the communication apparatus may include a chip, or may include a chip and another discrete device.

With reference to the eleventh aspect, in a possible implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a twelfth aspect, a computer-readable storage medium is provided. The computer-readable storage medium stores instructions; and when the instructions are run on a computer, the computer is caused to perform the method according to any one of the first aspect to the fourth aspect.

According to a thirteenth aspect, a computer program product including instructions is provided. When the computer program product is run on a computer, the computer is caused to perform the method according to any one of the first aspect to the fourth aspect.

For technical effects brought by any one of the possible implementations of the ninth aspect to the thirteenth aspect, refer to the technical effects brought by the different implementations of the first aspect or the second aspect. Details are not described herein again.

### BRIEF DESCRIPTION OF DRAWINGS

FIG. 1A is a diagram of transmission resources in a current FDD technology;
FIG. 1B is a diagram of transmission resources in a current TDD technology;
FIG. 1C is a diagram of transmission resources in a current SBFD technology;
FIG. 2 is a diagram of base station antennas used for uplink transmission and downlink transmission in a current TDD technology;
FIG. 3A is a diagram 1 of base station antennas in a current SBFD technology;
FIG. 3B is a diagram 2 of base station antennas in a current SBFD technology;
FIG. 4 is a diagram 3 of base station antennas in a current SBFD technology;
FIG. 5 is a diagram of an architecture of a communication system according to an embodiment of this application;
FIG. 6 is a diagram of structures of a network device and a terminal device according to an embodiment of this application;
FIG. 7 is a flowchart of a transmission indication method according to an embodiment of this application;
FIG. 8 is a diagram of associating a physical downlink channel with a reference signal according to an embodiment of this application;
FIG. 9 is a flowchart of a specific example of a transmission indication method according to an embodiment of this application when a physical downlink channel is a PDCCH;
FIG. 10 is a diagram of a structure of a MAC CE message according to an embodiment of this application;
FIG. 11 is a diagram of two TCI states that are activated by using a MAC CE and that are respectively associated with different time unit types according to an embodiment of this application;
FIG. 12 is a flowchart of a specific example of a transmission indication method according to an embodiment of this application when a physical downlink channel is a PDSCH;
FIG. 13 is a diagram of another structure of a MAC CE message according to an embodiment of this application;
FIG. 14 is a flowchart of a specific example of a transmission indication method according to an embodiment of this application when a physical uplink channel is a PUCCH;
FIG. 15 is a flowchart of a specific example of a transmission indication method according to an embodiment of this application when a physical uplink channel is a PUSCH;
FIG. 16 is a diagram of associating a PDSCH with a reference signal according to an embodiment of this application;
FIG. 17 is a flowchart of another transmission indication method according to an embodiment of this application; and
FIG. 18 is a diagram of a structure of a communication apparatus according to an embodiment of this application.

### DESCRIPTION OF EMBODIMENTS

For ease of understanding technical solutions in embodiments of this application, the following first briefly describes technologies or terms related to this application.

First, duplex technologies in a wireless communication system.

Currently, there are frequency division duplex (frequency division duplex, FDD) and TDD technologies in a new radio (new radio, NR) system.

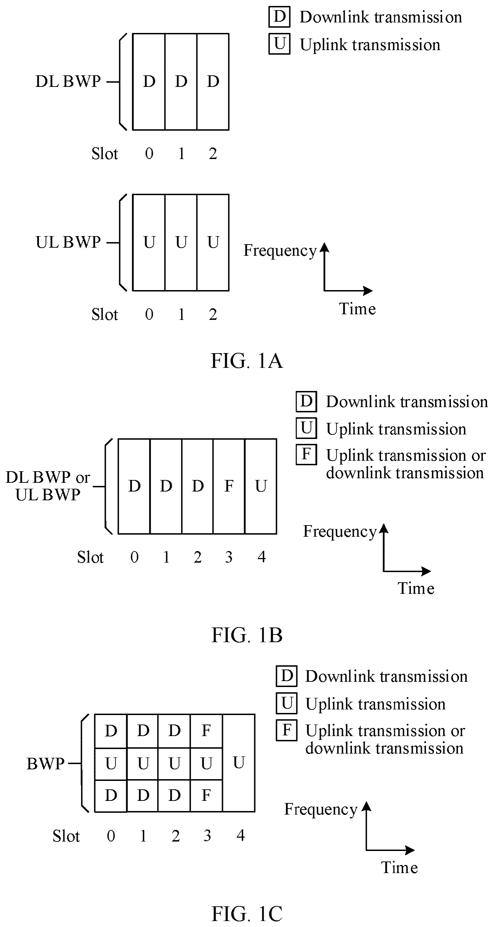

In the FDD technology, as shown in FIG. 1A, a slot 0 is used as an example. DL transmission may be performed in a DL bandwidth part (bandwidth part, BWP) in the slot 0, or UL transmission may be performed in a UL BWP in the slot 0. A horizontal axis indicates time, and a vertical axis indicates a frequency. In other words, any slot in the FDD technology may be used for UL transmission and DL transmission simultaneously.

In the TDD technology, as shown in FIG. 1B, only DL transmission can be performed in a slot 0, a slot 1, or a slot 2. Only UL transmission can be performed in a slot 4. A slot 3 is a flexible (flexible) slot, and may be used for UL transmission or DL transmission, but cannot be used for UL transmission and DL transmission simultaneously. A horizontal axis indicates time, and a vertical axis indicates a frequency. Compared with the FDD technology, the TDD technology has an advantage that fewer frequency domain resources are occupied, and only a DL BWP or a UL BWP is occupied. However, the TDD technology has a disadvantage that, as described in the background, a delay of UL transmission is increased.

To resolve the problem in the TDD technology, an SBFD technology is introduced into a communication standard. The SBFD technology may also be referred to as a flexible duplex technology, a complementary TDD (complementary TDD, C-TDD) technology, or a full duplex (full duplex) technology. A core idea of the SBFD technology is that UL transmission and DL transmission can be simultaneously performed in some symbols or slots. In the NR system, one slot includes 14 symbols.

For example, FIG. 1C is a diagram of transmission resources in the SBFD technology. A horizontal axis indicates time, and a vertical axis indicates a frequency. In a slot 0, a slot 1, or a slot 2, some frequency domain resources in a BWP may be used for UL transmission, and the other frequency domain resources may be used for DL transmission. In other words, the slot 0, the slot 1, or the slot 2 may be used for UL transmission and DL transmission simultaneously. The slot 0, the slot 1, or the slot 2 may therefore be referred to as an SBFD slot. Half-duplex user equipment (user equipment, UE) may send a physical uplink channel or receive a physical downlink channel in the slot 0, the slot 1, or the slot 2. Full-duplex UE may simultaneously send a physical uplink channel and receive a physical downlink channel in the slot 0, the slot 1, or the slot 2. Because a slot 4 can be used only for UL transmission, the slot 4 may be referred to as a non-SBFD slot. In a slot 3, when all frequency domain resources in a BWP are used for UL transmission, the slot 3 may be referred to as a non-SBFD slot. When some frequency domain resources in the BWP can be used for DL transmission, the slot 3 may be referred to as an SBFD slot.

In comparison with the TDD technology, in the SBFD technology, more time-frequency resources are used for UL transmission, and therefore a delay of the UL transmission can be reduced.

FIG. 1A, FIG. 1B, and FIG. 1C are all shown by using an example in which a time unit is a slot. The time unit may alternatively be a symbol. This is not limited in embodiments of this application.

Second, base station antennas in the TDD technology.

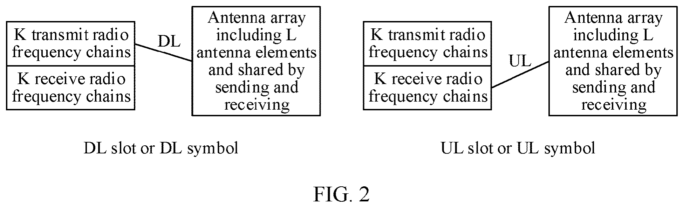

For example, FIG. 2 is a diagram of base station antennas used for UL transmission and DL transmission in the TDD technology. A base station (base station) has L antenna elements (antenna element), and the L antenna elements may form an antenna array shared by sending and receiving. In a DL symbol or a DL slot, the antenna array shared by sending and receiving is connected to K transmit radio frequency chains (chain), for DL sending. In a UL symbol or a UL slot, the antenna array shared by sending and receiving is connected to K receive radio frequency chains, for UL receiving.

It can be learned that, regardless of whether a base station performs DL sending or UL receiving, an antenna used by the base station does not change. Therefore, channel continuity and reciprocity between a physical uplink channel and a physical downlink channel can be ensured. The channel continuity may be understood as that physical downlink channels in different slots or symbols are continuous, that is, antennas used for DL transmission in different slots or symbols are fixed; or that physical uplink channels in different slots or symbols are continuous, that is, antennas used for UL transmission in different slots or symbols are fixed. The reciprocity between a physical uplink channel and a physical downlink channel may be understood as that the physical downlink channel is the same as the physical uplink channel, that is, antennas used for DL transmission and UL transmission are the same. The base station may obtain a channel feature of the physical downlink channel by measuring a channel feature of the physical uplink channel.

Third, base station antennas in the SBFD technology.

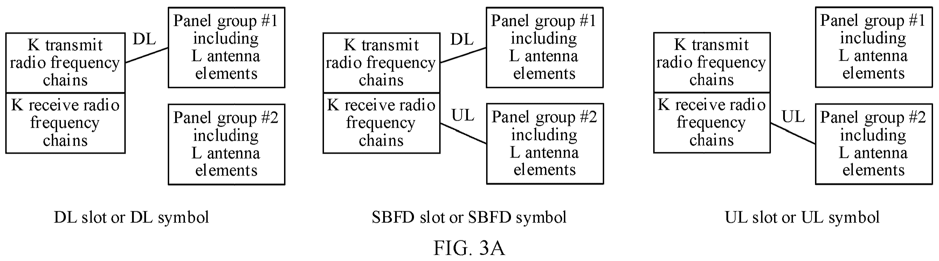

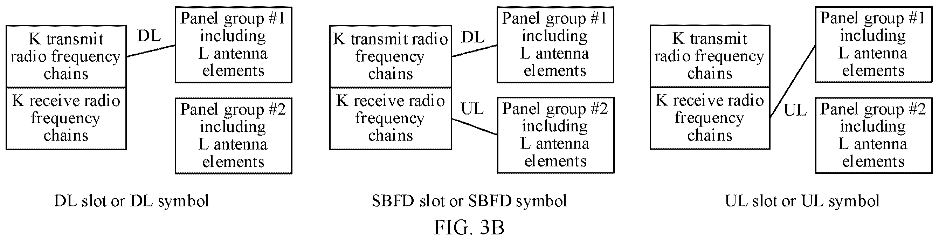

To enable the base station to simultaneously perform DL sending and UL receiving in an SBFD slot or symbol, in a possible implementation, L other antenna elements are added to a base station side based on the existing L antenna elements. As shown in FIG. 3A and FIG. 3B, in an SBFD slot or symbol, the base station performs DL sending by using a panel (panel) group #1 including L antenna elements, and performs UL receiving by using a panel group #2 including other L antenna elements. In this way, simultaneous sending and receiving by the base station is implemented.

As shown in FIG. 3A, in a UL slot or symbol, the base station may still perform UL receiving by using the panel group #2 including the L antenna elements. In this way, continuity of a physical uplink channel can be ensured. Correspondingly, in a DL slot or symbol, the base station may still perform DL sending by using the panel group #1 including the L antenna elements. In this way, continuity of a physical downlink channel can be ensured.

Alternatively, as shown in FIG. 3B, in a UL slot or symbol, the base station may further perform UL receiving by using the panel group #1 including the L antenna elements. In this way, the base station antennas used for UL receiving in the UL slot or symbol are consistent with the base station antennas used for DL sending in other (SBFD and/or DL) slots or symbols, so that the reciprocity between a physical uplink channel and a physical downlink channel can be ensured.

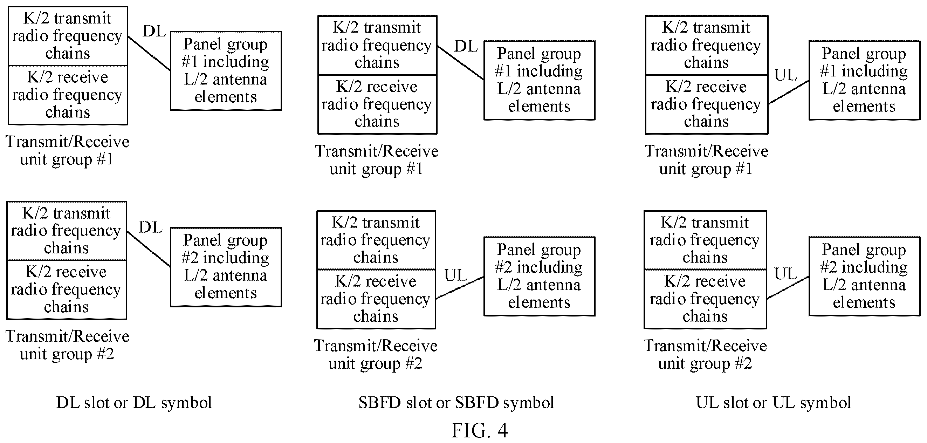

However, a problem in the foregoing solution of adding the L antenna elements to the base station is that costs are increased. In another possible implementation, a quantity of antenna elements on the base station side remains unchanged, and is still L. As shown in FIG. 4, L antenna elements are divided into a panel group #1 including L/2 antenna elements and a panel group #2 including L/2 antenna elements, K/2 transmit radio frequency chains and K/2 receive radio frequency chains form a transmit/receive unit group #1, and the other K/2 transmit radio frequency chains and the other K/2 receive radio frequency chains form a transmit/receive unit group #2. In an SBFD slot or symbol, the panel group #1 including the L/2 antenna elements is connected to the K/2 transmit radio frequency chains in the transmit/receive unit group #1, for DL sending; and the panel group #2 including the L/2 antenna elements is connected to the K/2 receive radio frequency chains in the transmit/receive unit group #2, for UL receiving. In this way, simultaneous sending and receiving by the base station is implemented.

In FIG. 4, in a DL slot or symbol, the base station performs DL sending by using L antenna arrays. Specifically, the panel group #1 including the L/2 antenna elements is connected to the K/2 transmit radio frequency chains in the transmit/receive unit group #1, for DL sending, and the panel group #2 including the L/2 antenna elements is connected to the K/2 transmit radio frequency chains in the transmit/receive unit group #2, also for DL sending. In a UL slot or symbol, the base station performs UL sending by using L antenna arrays. Specifically, the panel group #1 including the L/2 antenna elements is connected to the K/2 receive radio frequency chains in the transmit/receive unit group #1, for UL receiving; and the panel group #2 including the L/2 antenna elements is connected to the K/2 receive radio frequency chains in the transmit/receive unit group #2, also for UL receiving.

Fourth, TCI state.

As described in the background, the network device may send a TCI state to the terminal device in advance. One TCI state may include one or two pieces of quasi co-location (quasi co-location, QCL) information (QCL-Info), and each piece of QCL information may include an identifier of one reference signal and one QCL type (type). QCL types may include a QCL type A, a QCL type B, a QCL type C, and a QCL type D. Specifically, the QCL type A may be a set of a Doppler shift (Doppler shift), a Doppler spread (Doppler spread), an average delay (average delay), and a delay spread (delay spread). The QCL type B may be a set of a Doppler shift and a Doppler spread. The QCL type C may be a set of a Doppler shift and an average delay. The QCL type D may be a set of spatial receive parameters (spatial receive parameter), and is usually used for a frequency range (frequency range, FR) 2, namely, a high frequency range.

For example, configuration code of the TCI state may be as follows:

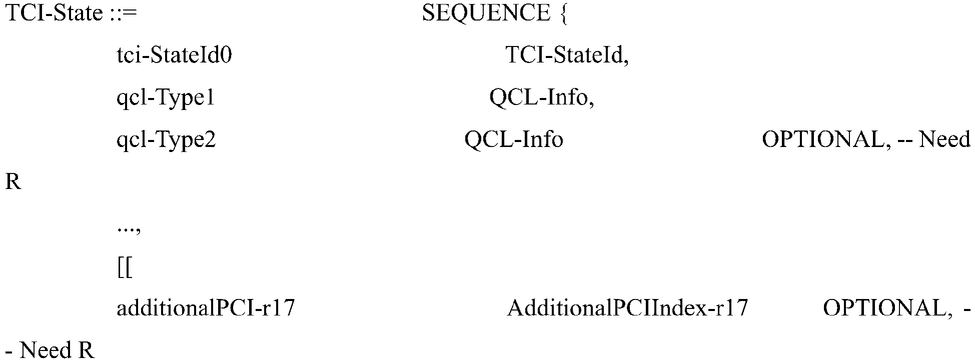

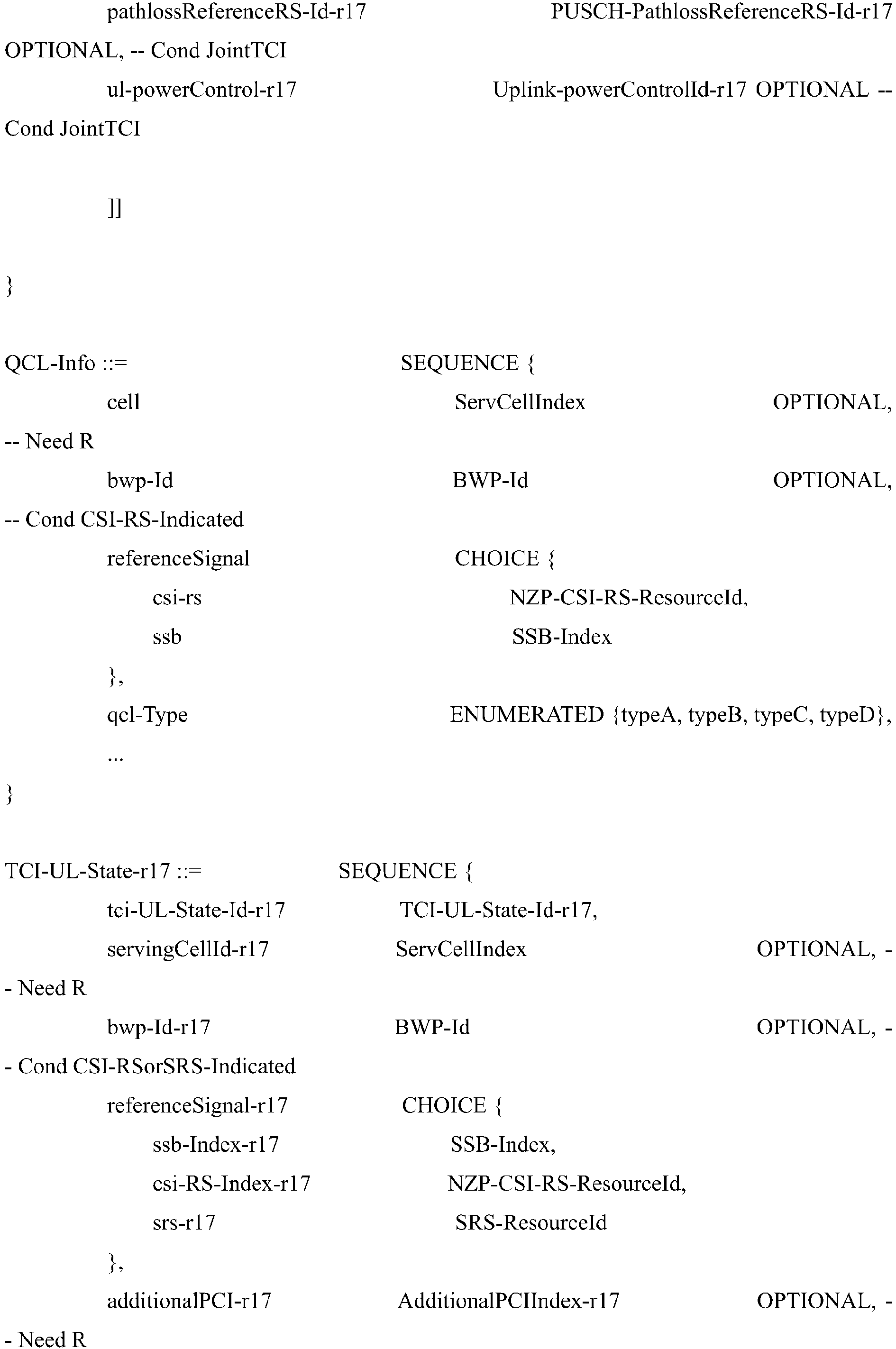

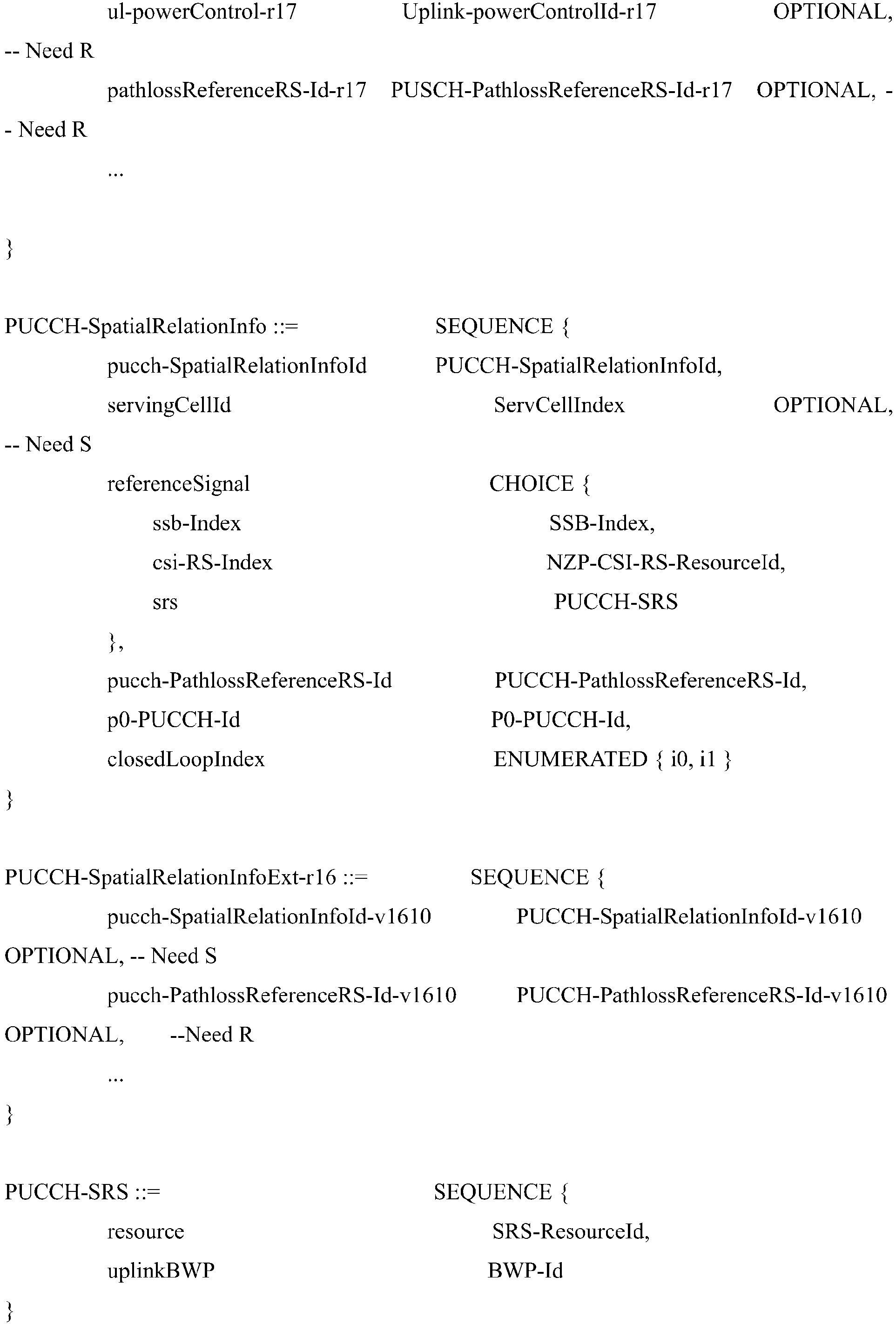

Fifth, transmission indication method in the current TDD technology.

When a physical channel is a physical downlink shared channel (physical downlink shared channel, PDSCH), a TCI state sent by the network device to the terminal device may be borne on a physical downlink control channel (physical downlink control channel, PDCCH) for scheduling the PDSCH. An identifier of a reference signal included in the TCI state may be an identifier of a channel state indication reference signal (channel state information-reference signal, CSI-RS). The TCI state may include two CSI-RSs, and identifiers of the two CSI-RSs may be the same or may be different. QCL types included in the TCI state may be, for example, the QCL type A and the QCL type D.

When the identifiers of the two CSI-RSs included in the TCI state are both an identifier of a first CSI-RS, the TCI state indicates that a demodulation reference signal (demodulation reference signal, DMRS) of the PDSCH is associated with the first CSI-RS with respect to the QCL type A and the QCL type D. In other words, a spatial receive parameter used when the terminal device receives the PDSCH may be obtained by using a spatial receive parameter used when the terminal device receives the first CSI-RS. In addition, a Doppler shift used when the terminal device receives the PDSCH may be obtained by using a Doppler shift used when the terminal device receives the first CSI-RS; a Doppler spread used when the terminal device receives the PDSCH may be obtained by using a Doppler spread used when the terminal device receives the first CSI-RS; an average delay used when the terminal device receives the PDSCH may be obtained by using an average delay used when the terminal device receives the first CSI-RS; and a delay spread used when the terminal device receives the PDSCH may be obtained by using a delay spread used when the terminal device receives the first CSI-RS.

When the identifiers of the two CSI-RSs included in the TCI state are respectively an identifier of a first CSI-RS and an identifier of a second CSI-RS, and the corresponding QCL types are respectively the QCL type A and the QCL type D, the TCI state indicates that a DMRS of the PDSCH is associated with the first CSI-RS with respect to the QCL type A, and the DMRS of the PDSCH is associated with the second CSI-RS with respect to the QCL type D. In other words, a Doppler shift used when the terminal device receives the PDSCH may be obtained by using a Doppler shift used when the terminal device receives the first CSI-RS; a Doppler spread used when the terminal device receives the PDSCH may be obtained by using a Doppler spread used when the terminal device receives the first CSI-RS; an average delay used when the terminal device receives the PDSCH may be obtained by using an average delay used when the terminal device receives the first CSI-RS; and a delay spread used when the terminal device receives the PDSCH may be obtained by using a delay spread used when the terminal device receives the first CSI-RS. In addition, a spatial receive parameter used when the terminal device receives the PDSCH may be obtained by using a spatial receive parameter used when the terminal device receives the second CSI-RS.

In conclusion, for any parameter in the associated QCL type, a value of the parameter used when the terminal device receives the PDSCH may be obtained through inference based on a value of the parameter used when the terminal device receives the first CSI-RS. Usually, the value of the parameter used when the terminal device receives the PDSCH is the same as the value of the parameter used when the terminal device receives the first CSI-RS.

When a physical channel is a PDCCH, a TCI state sent by the network device to the terminal device in advance may be borne in a radio resource control (radio resource control, RRC) message or a medium access control (medium access control, MAC) control element (control elements, CE). An identifier of a reference signal included in the TCI state may be an identifier of a CSI-RS. Identifiers of two CSI-RSs may be the same or different. QCL types included in the TCI state may be, for example, the QCL type A and the QCL type D.

When the identifiers of the two CSI-RSs included in the TCI state are both an identifier of a first CSI-RS, the TCI state indicates that a DMRS of the PDCCH is associated with the first CSI-RS with respect to the QCL type A and the QCL type D. For a specific meaning, refer to the related descriptions in the foregoing case in which the physical channel is the PDSCH. Details are not described herein again.

When the identifiers of the two CSI-RSs included in the TCI state are respectively an identifier of a first CSI-RS and an identifier of a second CSI-RS, and the corresponding QCL types are respectively the QCL type A and the QCL type D, the TCI state indicates that a DMRS of the PDCCH is associated with the first CSI-RS with respect to the QCL type A, and the DMRS of the PDCCH is associated with the second CSI-RS with respect to the QCL type D. For a specific meaning, refer to the related descriptions in the foregoing case in which the physical channel is the PDSCH. Details are not described herein again.

When a physical channel is a physical uplink control channel (physical uplink control channel, PUCCH), because the PUCCH is sent by the terminal device to the network device, the terminal device determines, only based on a spatial parameter used when a reference signal is sent or received, a spatial transmit parameter used when the PUCCH is sent. Usually, a value of the spatial transmit parameter used when the terminal device sends the PUCCH is the same as a value of the spatial parameter used when the terminal device sends or receives the reference signal. The network device may send a TCI state to the terminal device in advance, or may send spatial relation information (spatial relation information) to the terminal device in advance. The spatial relation information includes an identifier of a reference signal, or an identifier of a synchronization signal and physical broadcast channel block (synchronization signal and physical broadcast channel block, synchronization signal and PBCH block, SSB).

For example, the reference signal may be a CSI-RS, a tracking reference signal (tracking reference signal, TRS), or a sounding reference signal (sounding reference signal, SRS). When the reference signal is the CSI-RS, the value of the spatial transmit parameter used when the terminal device sends the PUCCH is a value of a spatial receive parameter used when the terminal device receives the CSI-RS; when the reference signal is the TRS, the value of the spatial transmit parameter used when the terminal device sends the PUCCH is a value of a spatial receive parameter used when the terminal device receives the TRS; or when the reference signal is the SRS, the value of the spatial transmit parameter used when the terminal device sends the PUCCH is a value of a spatial transmit parameter used when the terminal device sends the SRS. The spatial transmit parameter may be understood as a parameter of a spatial transmit filter, and the spatial receive parameter may be understood as a parameter of a spatial receive filter.

Usually, when the TCI state is applied to a scenario of a physical uplink channel, the TCI state may also be referred to as a TCI UL state message.

For a CSI-RS used for time-frequency tracking, namely, a TRS, the network device may send all TRSs in a TRS set by using a same antenna port. For example, the TRS set includes four TRSs, the four TRSs may occupy two slots, and the network device may send the four TRSs by using a same antenna port.

Sixth, problems existing when the transmission indication method in the current TDD technology is applied to the SBFD technology.

Problem 1: Transmission performance may deteriorate.

As described in the background, the physical downlink channel in the SBFD slot and the physical downlink channel in the non-SBFD slot may be implemented by different antennas of the network device. For details, refer to FIG. 4. Correspondingly, beams and/or channels sent by the network device in the SBFD slot and the non-SBFD slot may also be different. If the transmission indication method in the current TDD technology is applied to the SBFD technology, because the physical downlink channel corresponds to a TCI state, the terminal device receives the physical downlink channel in both the SBFD slot and the non-SBFD slot by using a same parameter. When the terminal device receives different beams by using a same parameter, receiving performance of the terminal device deteriorates, and the terminal device even cannot receive the physical downlink channel.

Similarly, for a physical uplink channel, the physical uplink channel in an SBFD slot and the physical uplink channel in a non-SBFD slot may be implemented by different antennas of the network device. For details, refer to FIG. 3B or FIG. 4. Correspondingly, beams and/or channels that can be received by the network device in the SBFD slot and the non-SBFD slot may also be different. If the transmission indication method in the current TDD technology is applied to the SBFD technology, because the physical uplink channel corresponds to a TCI state, the terminal device sends the physical uplink channel in both the SBFD slot and the non-SBFD slot by using a same parameter. However, the beams and/or the channels that can be received by the network device may have changed. Consequently, receiving performance of the network device deteriorates, and the network device even cannot receive the physical uplink channel.

Problem 2: There may be a plurality of cases for a slot that a reference signal in a TCI state is in.

A reference signal corresponding to an identifier that is of the reference signal and that is included in a TCI state or in spatial relation information may be periodic or semi-persistent. If the transmission indication method in the current TDD technology is applied to the SBFD technology, the reference signal may be in both an SBFD slot and a non-SBFD slot. A downlink reference signal is used as an example. A beam used by the network device to send the reference signal in the SBFD slot may be different from a beam used to send the reference signal in the non-SBFD slot. Correspondingly, a parameter used by the terminal device to receive the reference signal in the SBFD slot is also different from a parameter used to receive the reference signal in the non-SBFD slot. Therefore, when sending or receiving a physical channel, the terminal device does not determine whether to use a parameter for receiving a reference signal in an SBFD slot or a parameter for receiving a reference signal in a non-SBFD slot. Consequently, transmission performance may deteriorate.

Problem 3: Time-frequency tracking performance of the terminal device may deteriorate.

If the transmission indication method in the current TDD technology is applied to the SBFD technology, a TRS may be in both an SBFD slot and a non-SBFD slot. An antenna port used by the network device to send the TRS in the SBFD slot may be different from an antenna port used to send the TRS in the non-SBFD slot. Therefore, when the terminal device uses a same parameter to receive the TRS to perform time-frequency tracking, accuracy of the time-frequency tracking may be reduced.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

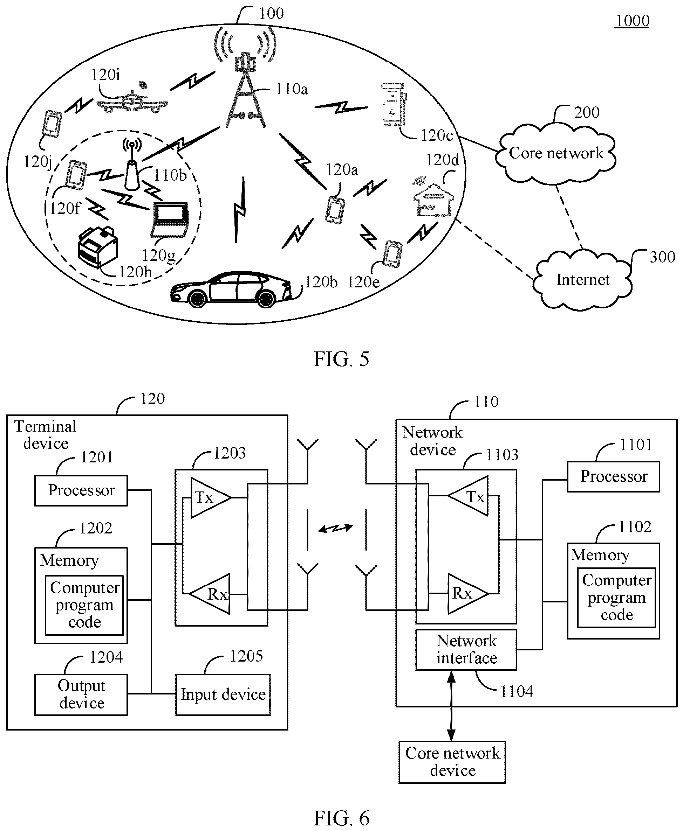

A diagram of an architecture of a mobile communication system shown in FIG. 5 is a diagram of an architecture of a communication system 1000 used in an embodiment of this application. As shown in FIG. 5, the communication system includes a radio access network 100 and a core network 200. Optionally, the communication system 1000 may further include an internet 300. The radio access network 100 may include at least one radio access network device (for example, 110a and 110b in FIG. 5), and may further include at least one terminal device (for example, 120a to 120j in FIG. 5). The terminal device is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 5 is only an example diagram. The communication system may further include other network devices, for example, may further include a wireless relay device and a wireless backhaul device, which are not shown in FIG. 5.

The radio access network device is an access device through which the terminal device accesses the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that implements some functions of a base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a MAC layer of the base station, and may further complete functions of some or all physical layers. For detailed descriptions of the foregoing protocol layers, refer to technical specifications related to the 3rd generation partnership project (3rd generation partnership project, 3GPP). The radio access network device may be a macro base station (for example, 110a in FIG. 5), or may be a micro base station or an indoor base station (for example, 110b in FIG. 5), or may be a relay node or a donor node. A specific technology and a specific device form that are used by the radio access network device are not limited in embodiments of this application. For ease of description, the following provides descriptions by using an example in which the radio access network device is a base station.

The terminal device is a device with a wireless transceiver function, and may send a signal to the base station, or receive a signal from the base station. The terminal device may also be referred to as a terminal, user equipment (user equipment, UE), a mobile station, a mobile terminal device, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, remote medical, a smart grid, smart furniture, smart office, smart wearables, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

The base station and the terminal device may be at fixed locations or may be movable. The base station and the terminal device may be deployed on land, including indoor or outdoor devices, or handheld or vehicle-mounted devices; may be deployed on a water surface; or may be deployed on an airplane, a balloon, or a satellite. Application scenarios of the base station and the terminal device are not limited in embodiments of this application.

Roles of the base station and the terminal device may be relative. For example, a helicopter or uncrewed aerial vehicle 120i in FIG. 5 may be configured as a mobile base station. For the terminal devices 120j accessing the radio access network 100 via 120i, the terminal device 120i is a base station. However, for the base station 110a, 120i is a terminal device, that is, communication between 110a and 120i is performed according to a wireless air interface protocol. Certainly, communication between 110a and 120i may alternatively be performed according to an interface protocol between base stations. In this case, for 110a, 120i is also a base station. Therefore, the base station and the terminal device may be collectively referred to as a communication apparatus, 110a and 110b in FIG. 5 may be referred to as a communication apparatus having a base station function, and 120a to 120j in FIG. 5 may be referred to as a communication apparatus having a terminal device function.

Communication between a base station and a terminal device, between base stations, and between terminal devices may be performed through a licensed spectrum, an unlicensed spectrum, or both a licensed spectrum and an unlicensed spectrum; and may be performed through a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as the smart grid, the industrial control, the smart transportation, and the smart city. A function of the terminal device may be performed by a module (for example, a chip or a modem) in the terminal device, or may be performed by an apparatus including the function of the terminal device.

In this application, the base station sends a downlink signal or downlink information to the terminal device, where the downlink information is borne on a downlink channel; and the terminal device sends an uplink signal or uplink information to the base station, where the uplink information is borne on an uplink channel. To communicate with the base station, the terminal device needs to establish a wireless connection to a cell controlled by the base station. The cell that establishes the wireless connection to the terminal device is referred to as a serving cell of the terminal device. When communicating with the serving cell, the terminal device is further interfered with by a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, all symbols in embodiments of this application are time domain symbols.

It may be understood that in embodiments of this application, a PDSCH and a PDCCH are merely examples of a downlink data channel and a downlink control channel respectively, and a physical uplink shared channel (physical uplink shared channel, PUSCH) and a PUCCH are merely examples of an uplink data channel and an uplink control channel respectively. In different systems and different scenarios, a data channel and a control channel may have different names. This is not limited in embodiments of this application.

For example, a network device 110 provided in embodiments of this application may be 110a or 110b in FIG. 5, and a terminal device 120 provided in embodiments of this application may be any one of 120a to 120j in FIG. 5. Optionally, FIG. 6 is a diagram of structures of the network device 110 and the terminal device 120 according to an embodiment of this application.

The terminal device 120 includes at least one processor 1201 and at least one transceiver 1203. Optionally, the terminal device 120 may further include at least one memory 1202, at least one output device 1204, or at least one input device 1205.

The processor 1201, the memory 1202, and the transceiver 1203 are connected through a communication line. The communication line may include a path for transmission of information between the foregoing components.

The processor 1201 may be a general-purpose central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor. During specific implementation, in an embodiment, the processor 1201 may alternatively include a plurality of CPUs, and the processor 1201 may be a single-core processor or a multi-core processor. The processor herein may be one or more devices, circuits, or processing cores configured to process data.

The memory 1202 may be an apparatus having a storage function, for example, may be a read-only memory (read-only memory, ROM) or another type of static storage device that can store static information and instructions, a random access memory (random access memory, RAM) or another type of dynamic storage device that can store information and instructions, or may be a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM) or another compact disk storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer, but is not limited thereto. The memory 1202 may exist independently, and is connected to the processor 1201 through the communication line. The memory 1202 may alternatively be integrated with the processor 1201.

The memory 1202 is configured to store computer-executable instructions for executing the solutions in this application, and the processor 1201 controls the execution. Specifically, the processor 1201 is configured to execute the computer-executable instructions stored in the memory 1202, to implement a wireless communication method in embodiments of this application.

Alternatively, optionally, in this embodiment of this application, the processor 1201 may perform a processing-related function in the wireless communication method provided in the following embodiments of this application, and the transceiver 1203 is responsible for communication with another device or a communication network. This is not specifically limited in embodiments of this application.

Optionally, the computer-executable instructions in embodiments of this application may also be referred to as application program code or computer program code. This is not specifically limited in embodiments of this application.

The transceiver 1203 may use any type of apparatus like a transceiver, and is configured to communicate with another device or a communication network, for example, the Ethernet, a radio access network (radio access network, RAN), or a wireless local area network (wireless local area networks, WLAN). The transceiver 1203 includes a transmitter (transmitter, Tx) and a receiver (receiver, Rx).

The output device 1204 communicates with the processor 1201, and may display information in a plurality of manners. For example, the output device 1204 may be a liquid crystal display (liquid crystal display, LCD), a light emitting diode (light emitting diode, LED) display device, a cathode ray tube (cathode ray tube, CRT) display device, or a projector (projector).

The input device 1205 communicates with the processor 1201, and may receive a user input in a plurality of manners. For example, the input device 1205 may be a mouse, a keyboard, a touchscreen device, or a sensing device.

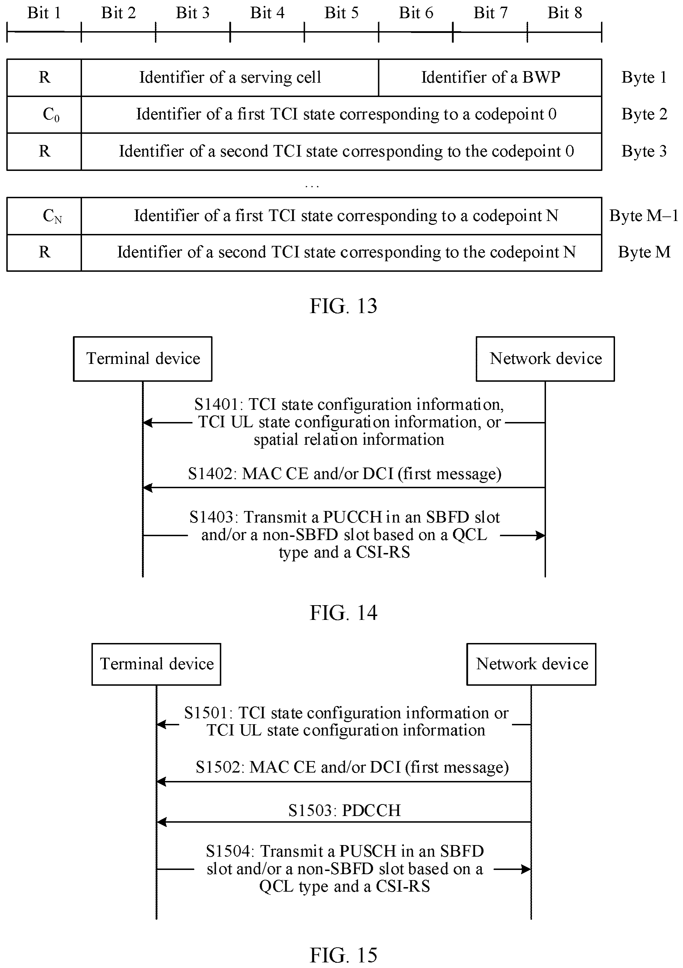

The network device 110 includes at least one processor 1101, at least one transceiver 1103, and at least one network interface 1104. Optionally, the network device 110 may further include at least one memory 1102. The processor 1101, the memory 1102, the transceiver 1103, and the network interface 1104 are connected through a C communication line. The network interface 1104 is configured to connect to a core network device through a link (for example, an S1 interface), or connect to a network interface of another network device through a wired or wireless link (for example, an X2 interface) (not shown in FIG. 14). This is not specifically limited in embodiments of this application. In addition, for related descriptions of the processor 1101, the memory 1102, and the transceiver 1103, refer to the descriptions of the processor 1201, the memory 1202, and the transceiver 1203 in the terminal device 120. Details are not described herein.

The following describes in detail transmission indication methods provided in embodiments of this application with reference to FIG. 1A to FIG. 5.

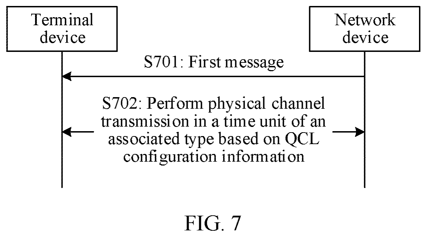

FIG. 7 shows a transmission indication method according to an embodiment of this application. The transmission indication method includes the following steps.

Step S701: A network device sends a first message to a terminal device, and correspondingly, the terminal device receives the first message from the network device.

The first message indicates QCL configuration information associated with a type of a time unit for physical channel transmission, the physical channel transmission includes at least one of transmission of a physical uplink channel and transmission of a physical downlink channel, and the type of the time unit includes a type used only for physical uplink transmission, a type used only for physical downlink transmission, and a type used for physical uplink transmission and physical downlink transmission.

Step S702: The terminal device and the network device perform the physical channel transmission in the time unit of the associated type based on the QCL configuration information.

In the transmission indication method provided in this embodiment of this application, the QCL configuration information indicated in the first message is associated with the type of the time unit for the physical channel transmission. In other words, QCL configuration information used by the terminal device to perform the physical channel transmission in different types of time units may be different. On a network device side, antennas used for the physical channel transmission in different types of time units may be different, and corresponding transmit beams of the network device or beams that can be received by the network device are also different. Therefore, for the foregoing problem 1, to adapt to antenna or beam changes on the network device side in different types of time units, the terminal device performs the physical channel transmission in different types of time units by using different QCL configuration information, so that receiving or sending performance of the terminal device can be improved.

For example, the first message in this embodiment of this application may be an information element (information element) of a TCI state, or the first message in this embodiment of this application may be an information element including a TCI state. For example, the first message may be an information element including one or two TCI states. The QCL configuration information in this embodiment of this application may include a QCL type.

Optionally, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type further includes a symbol of the first type and a symbol of the second type, or a slot of the second type further includes a symbol of the first type and a symbol of the second type. In this solution, a slot including both the symbol of the first type and the symbol of the second type may be classified as a slot of the first type, or may be classified as a slot of the second type. This is not limited in embodiments of this application.

When this embodiment of this application is applied to an SBFD technology, the first type may be non-SBFD, and the second type may be SBFD. A time unit of the type used only for physical uplink transmission or a time unit of the type used only for physical downlink transmission may be a non-SBFD slot or a non-SBFD symbol. A time unit of the type used for physical uplink transmission and physical downlink transmission may be an SBFD slot or an SBFD symbol. It may be specified in advance in a protocol, or indicated by signaling, that a flexible slot is an SBFD slot or a non-SBFD slot, and a flexible symbol is an SBFD symbol or a non-SBFD symbol. The signaling may be RRC, a MAC CE, or downlink control information (downlink control information, DCI).

Optionally, the first message further indicates a reference signal and/or an SSB that are/is associated with the QCL configuration information. In this solution, the first message may include an identifier of the reference signal associated with the QCL configuration information, to indicate the reference signal associated with the QCL configuration information. The QCL configuration information in this embodiment of this application may further include the reference signal and/or the SSB.

Further, step S702 may include: The terminal device performs the physical channel transmission in the time unit of the associated type based on the QCL configuration information and the reference signal.

As described above, the reference signal may be a CSI-RS, a TRS, or an SRS, and the CSI-RS, the TRS, or the SRS may be referred to as a type of the reference signal. Which signal that the reference signal specifically is may be uniquely determined by the identifier of the reference signal.

In this embodiment of this application, because the reference signal is associated with the QCL configuration information, and the QCL configuration information is associated with the type of the time unit, the reference signal is associated with the type of the time unit. Specifically, it may be understood that the reference signal is associated with a physical channel in the type of the time unit with respect to QCL.

It may be understood that three types of time units may be associated with a same reference signal of a same type. In other words, the three types of time units may be associated with an identifier of the same reference signal.

Alternatively, three types of time units may be associated with different reference signals of a same type; or three types of time units may be associated with different types of reference signals. In other words, the three types of time units may be associated with identifiers of different reference signals. In this case, the following may be specifically included: The three types of time units may be respectively associated with identifiers of three different reference signals; or two of the three types of time units may be associated with an identifier of a same reference signal, and the other type of time unit may be associated with an identifier of another reference signal.

It may be understood that time units of a same type may be associated with one reference signal (corresponding to one piece of QCL information), or may be associated with two reference signals (corresponding to two pieces of QCL information). One reference signal may be associated with one QCL type. QCL information (for example, may be understood as a first TCI state) associated with a time unit of the first type may be different from QCL information (for example, may be understood as a second TCI state) associated with a time unit of the second type.

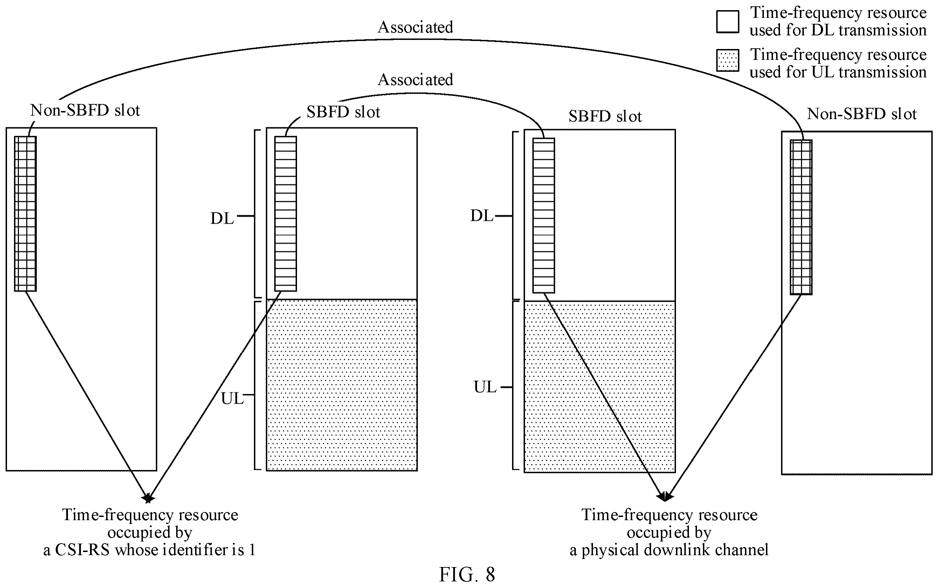

For example, the physical channel transmission is physical downlink channel transmission. FIG. 8 is a diagram of associating a physical channel with a reference signal. Slots of different types are associated with a same reference signal of a same type. Specifically, an SBFD slot and a non-SBFD slot are separately associated with a CSI-RS whose identifier is 1. In other words, the CSI-RS whose identifier is 1 may be in the non-SBFD slot, or may be in the SBFD slot. The CSI-RS whose identifier is 1 in the non-SBFD slot may be associated with a physical downlink channel in the non-SBFD slot, and the CSI-RS whose identifier is 1 in the SBDF slot may be associated with a physical downlink channel in the SBFD slot. Both physical downlink channel transmission and CSI-RS transmission belong to DL transmission. Therefore, in frequency domain, the physical downlink channel and the CSI-RS each occupy a frequency domain resource used for the DL transmission.

In FIG. 8, the first message may include one TCI state. For example, the TCI state includes two pieces of QCL information, where one piece of QCL information includes the identifier 1 of the CSI-RS and a QCL type A, and the other piece of QCL information includes the identifier 1 of the CSI-RS and a QCL type D. In this case, the first message may include the identifier 1 of the CSI-RS, the QCL type A, and the QCL type D.

It may be understood that the association relationship shown in FIG. 8 is still applicable to a physical uplink channel, including a physical uplink channel for persistent (persistent) and/or semi-persistent (semi-persistent, SP) and/or dynamic scheduling (scheduling). The physical uplink channel includes a PUCCH and/or a PUSCH. A physical uplink channel for persistent scheduling may be understood as a physical uplink channel configured by using RRC. A physical uplink channel for semi-persistent scheduling may be understood as a physical uplink channel that needs a related parameter to be configured by using RRC, that is then activated by using a MAC CE or DCI, and whose periodic transmission may be performed once the physical uplink channel is activated. A physical uplink channel for dynamic scheduling may be understood as a PUCCH or a PUSCH scheduled by using DCI.

Optionally, when the physical downlink channel is a PDCCH, the first message is a MAC layer message.

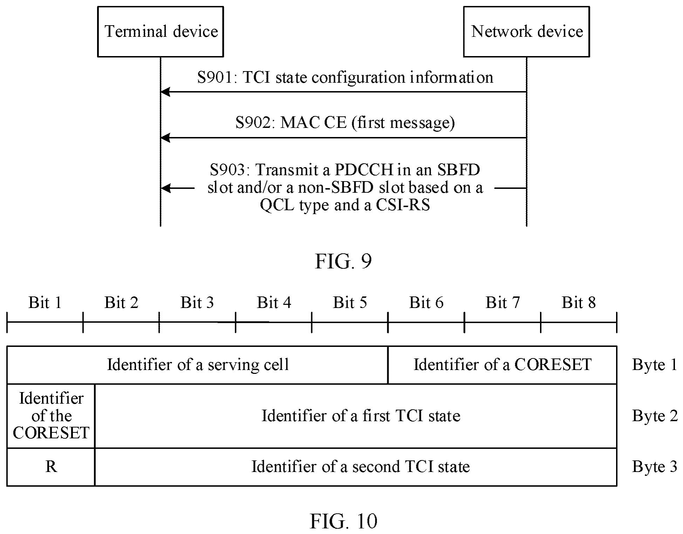

For example, FIG. 9 is a flowchart of a specific example of a transmission indication method according to an embodiment of this application when a physical downlink channel is a PDCCH. The method includes the following steps.

Step S901: A network device may send TCI state configuration information to a terminal device. Correspondingly, the terminal device may receive the TCI state configuration information from the network device.

The TCI state configuration information may be carried in an RRC message. The TCI state configuration information may include a plurality of TCI states configured by the network device for the terminal device.

Step S902: The network device may send a MAC CE message to the terminal device. Correspondingly, the terminal device may receive the MAC CE message from the network device.

In this example, the first message may be the MAC CE message. For one control-resource set (control-resource set, CORESET), two TCI states that are respectively associated with different time unit types may be activated.

For example, FIG. 10 is a diagram of a structure of a MAC CE message. The structure may include an identifier field of a serving cell, an identifier field of a CORESET, an identifier field of a first TCI state, a reserved (reserved, R) field, and an identifier field of a second TCI state. The identifier field of the serving cell may occupy first five bits of a byte 1; the identifier field of the CORESET may occupy four bits, including last three bits of the byte 1 and a 1^{st} bit of a byte 2; the identifier field of the first TCI state may occupy last seven bits of the byte 2; the R field may occupy a 1^{st} bit of a byte 3; and the identifier field of the second TCI state may occupy last seven bits of the byte 3. The first TCI state is associated with a type (for example, a second type) of one time unit, and the second TCI state is associated with a type (for example, a first type) of another time unit. Specifically, when the R field is set to 1, it indicates that the first TCI state is associated with a type of one time unit, and the second TCI state is associated with a type of another time unit.

It is assumed that the first TCI state includes an identifier 1 of a CSI-RS, a QCL type A, and a QCL type D; the second TCI state includes an identifier 2 of a CSI-RS, the QCL type A, and the QCL type D; transmission of the CSI-RS whose identifier is 1 is performed only in an SBFD slot; and transmission of the CSI-RS whose identifier is 2 is performed only in a non-SBFD slot. In this case, a PDCCH in the SBFD slot may be associated with the first TCI state, and a PDCCH in the non-SBFD slot may be associated with the second TCI state. Specifically, the PDCCH in an SBFD slot may be associated with the CSI-RS whose identifier is 1, and the PDCCH in the non-SBFD slot may be associated with the CSI-RS whose identifier is 2.

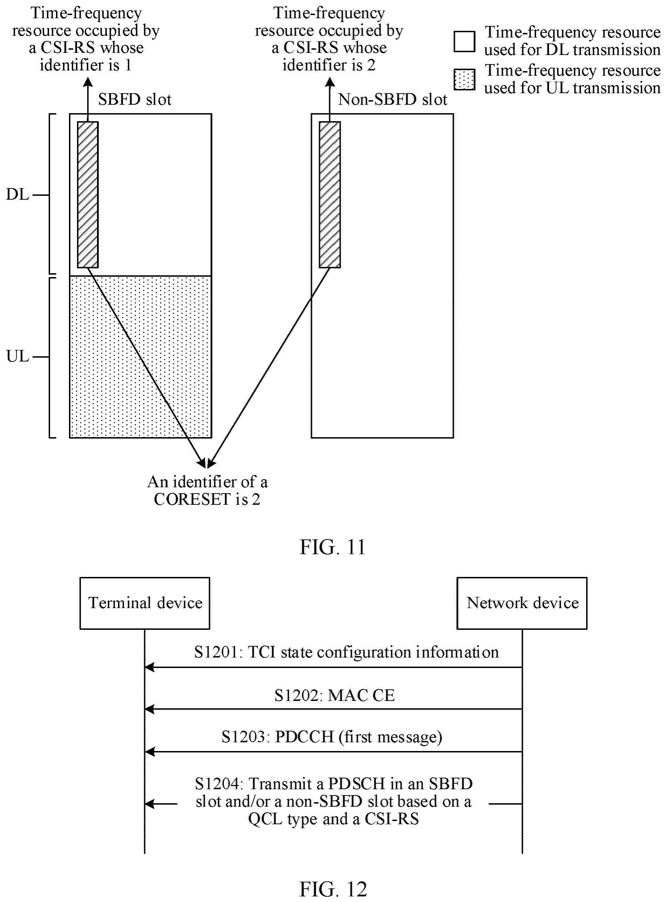

For example, an identifier of the CORESET is 2. FIG. 11 is a diagram of two TCI states that are activated by using a MAC CE and that are respectively associated with different time unit types for one CORESET. Slots of different types are associated with different reference signals of a same type. Specifically, the SBFD slot is associated with the CSI-RS whose identifier is 1, and the non-SBFD slot is associated with the CSI-RS whose identifier is 2. In other words, the CSI-RS whose identifier is 1 may be in the SBFD slot, and the CSI-RS whose identifier is 2 may be in the non-SBFD slot. CSI-RS transmission belongs to DL transmission. Therefore, in frequency domain, the CSI-RS occupies a frequency domain resource used for the DL transmission.

Step S903: The network device may send a PDCCH to the terminal device in an SBFD slot and/or a non-SBFD slot based on a QCL type and a CSI-RS. Correspondingly, the terminal device may receive the PDCCH from the network device in the SBFD slot and/or the non-SBFD slot based on the QCL type and the CSI-RS.

With reference to FIG. 10, the network device or the terminal device performs transmission of the PDCCH in the SBFD slot based on the first TCI state including the identifier 1 of the CSI-RS, the QCL type A, and the QCL type D; and the network device or the terminal device performs transmission of the PDCCH in the non-SBFD slot based on the second TCI state including the identifier 2 of the CSI-RS, the QCL type A, and the QCL type D.

Optionally, when the physical downlink channel is a PDSCH, or when the physical uplink channel is a PUSCH or a PUCCH, the first message is DCI. The transmission indication method provided in this embodiment of this application further includes: The network device sends a second message to the terminal device. Correspondingly, the terminal device receives the second message from the network device. The second message is used to configure a plurality of pieces of QCL configuration information based on the type of the time unit, and the first message specifically indicates, from the plurality of pieces of QCL configuration information, the QCL configuration information associated with the type of the time unit in which the physical channel transmission is currently performed. In this solution, the plurality of pieces of QCL configuration information may be preconfigured based on the type of the time unit, and the QCL configuration information associated with the type of the time unit in which the physical channel transmission is currently performed is selected from the plurality of pieces of QCL configuration information based on an actual requirement. This can increase an application scope and flexibility of the solution.

For example, the second message may be an RRC message or a MAC CE message.

For example, FIG. 12 is a flowchart of a specific example of a transmission indication method according to an embodiment of this application when a physical downlink channel is a PDSCH. The method includes the following steps.

Step S1201: A network device may send TCI state configuration information to a terminal device. Correspondingly, the terminal device may receive the TCI state configuration information from the network device.

The TCI state configuration information may be carried in an RRC message.

In a possible implementation, the TCI state configuration information may include a plurality of TCI states configured by the network device for the terminal device.

Step S1202: The network device may send a MAC CE message to the terminal device. Correspondingly, the terminal device may receive the MAC CE message from the network device.

In a possible implementation, the second message may be the MAC CE message.

For example, FIG. 13 is a diagram of another structure of a MAC CE message. The structure may include an identifier field of a serving cell, an identifier field of a BWP, fields C₀ to C_{N}, identifier fields of first TCI states respectively corresponding to codepoints (codepoint) 0 to N, an R field, and identifier fields of second TCI states respectively corresponding to the codepoints (codepoint) 0 to N. The identifier field of the serving cell may occupy first five bits of a byte 1. The identifier field of the BWP may occupy last three bits of the byte 1. A value of C₀ indicates whether a next byte of a byte in which C₀ is located exists. In this example, if the value of C₀ is 1, it indicates that a byte 3 exists. Similarly, if a value of C_{N} is also 1, it indicates that a byte M exists. Each R field may occupy one bit. An identifier field of each first TCI state or an identifier field of each second TCI state may occupy seven bits.

In this embodiment of this application, the MAC CE message mainly indicates the identifier of the first TCI state corresponding to each codepoint and the identifier of the second TCI state corresponding to each codepoint. The identifiers of the first TCI states respectively corresponding to the codepoints 0 to N and the identifiers of the second TCI states respectively corresponding to the codepoints 0 to N may also be represented as a TCI state ID_{i,j}, where i represents a value of the codepoint, and a range of the value is 0 to N; and j represents the first TCI state or the second TCI state, and a value of j is 1 or 2. If a TCI state ID_{0,1}=5, and a TCI state ID_{0,2}=8, it indicates that the codepoint 0 is associated with TCI states whose identifiers are 5 and 8 and that are configured in step S1201.

In FIG. 13, a PDSCH in an SBFD slot may be associated with the first TCI states respectively corresponding to the codepoints 0 to N, and a PDSCH in a non-SBFD slot may be associated with the second TCI states respectively corresponding to the codepoints 0 to N. However, which pair of a first TCI state and a second TCI state is specifically used for transmission of a PDSCH in subsequent step S1204 or QCL configuration information associated with a type of a time unit in which PDSCH transmission is currently performed is determined by a value that is of a codepoint and that is included in DCI in step S1203. For example, if the value that is of the codepoint and that is included in the DCI in step S1203 is 2, the PDSCH whose transmission is performed in an SBFD slot in step S1204 is associated with a first TCI state corresponding to a codepoint 2, and the PDSCH whose transmission is performed in a non-SBFD slot in step S1204 is associated with a second TCI state corresponding to the codepoint 2.

FIG. 13 is merely an example of the structure of the MAC CE. In actual implementation, the MAC CE may further have another similar structure. This is not limited in embodiments of this application.

Step S1203: The network device may send a PDCCH to the terminal device. Correspondingly, the terminal device may receive the PDCCH from the network device.

The PDCCH in step S1203 may bear the DCI including the value of the codepoint. The first message may be the DCI. For a PDSCH for semi-persistent scheduling (semi-persistent scheduling, SPS), step S1203 may not be performed.

Step S1204: The network device may send the PDSCH to the terminal device in the SBFD slot and/or the non-SBFD slot based on a QCL type and a CSI-RS. Correspondingly, the terminal device may receive the PDSCH from the network device in the SBFD slot and/or the non-SBFD slot based on the QCL type and the CSI-RS.

In this embodiment of this application, the PDSCHs whose transmission is performed in the SBFD slot and the non-SBFD slot are scheduled by using a same PDCCH. PDSCHs whose transmission is performed in different types of slots may be repeated. To be specific, the PDSCHs whose transmission is performed in the SBFD slot and the non-SBFD slot may bear a same transport block (transport block, TB). Alternatively, in an SPS scenario, the PDSCHs whose transmission is performed in the SBFD slot and the non-SBFD slot may bear different TBs. In the SPS scenario, periodic PDSCHs after the PDSCH scheduled by using DCI is activated may all be new transmission.

In another possible implementation, the TCI state configuration information in step S1201 may include a plurality of pieces of QCL configuration information configured by the network device based on a type of a time unit. In this implementation, the second message may be the RRC message. The MAC CE message in step S1202 or the PDCCH in step S1203 may include a value of a codepoint, that is, the first message may be the MAC CE message or the DCI. The MAC CE message may further directly indicate identifiers of two TCI states, for example, an identifier of a first TCI state and an identifier of a second TCI state.

For example, FIG. 14 is a flowchart of a specific example of a transmission indication method according to an embodiment of this application when a physical uplink channel is a PUCCH. The method includes the following steps.

Step S1401: A network device may send TCI state configuration information, TCI UL state configuration information, or spatial relation information to a terminal device. Correspondingly, the terminal device may receive the TCI state configuration information, the TCI UL state configuration information, or the spatial relation information from the network device.

For related descriptions of the TCI state configuration information and the TCI UL state configuration information in step S1401, refer to the related descriptions of the TCI state configuration information in step S1201 above. Details are not described herein again.

Step S1402: The network device may send a MAC CE message and/or a DCI message to the terminal device. Correspondingly, the terminal device may receive the MAC CE message and/or the DCI message from the network device.

For an example of a structure of the MAC CE message in step S1402 and content included in the DCI message, refer to the related descriptions of step S1202 and step S1203. Details are not described herein again.

Step S1403: The terminal device may send a PUCCH to the network device in an SBFD slot and/or a non-SBFD slot based on a QCL type and a CSI-RS. Correspondingly, the network device may receive the PUCCH from the terminal device in the SBFD slot and/or the non-SBFD slot based on the QCL type and the CSI-RS. The QCL type herein may be a QCL type D by default. To be specific, a spatial transmit parameter used to send the PUCCH is the same as a spatial receive parameter used to receive the CSI-RS. This is similar for another reference signal or SSB. Details are not described herein again.

The PUCCH whose transmission is performed in the SBFD slot in step S1403 is associated with a first TCI state or first spatial relation information corresponding to a value that is of a codepoint and that is included in the DCI message. The PUCCH whose transmission is performed in the non-SBFD slot in step S1403 is associated with a second TCI state or second spatial relation information corresponding to the value that is of the codepoint and that is included in the DCI message. The PUCCHs may be repeated. In other words, the PUCCH whose transmission is performed in the SBFD slot and the PUCCH whose transmission is performed in the non-SBFD slot may bear same uplink control information. Alternatively, the PUCCHs may be periodic. In other words, the PUCCH whose transmission is performed in the SBFD slot and the PUCCH whose transmission is performed in the non-SBFD slot may bear different uplink control information.

For example, FIG. 15 is a flowchart of a specific example of a transmission indication method according to an embodiment of this application when a physical uplink channel is a PUSCH. The method includes the following steps.

Step S1501: A network device may send TCI state configuration information or TCI UL state configuration information to a terminal device. Correspondingly, the terminal device may receive the TCI state configuration information or the TCI UL state configuration information from the network device.

For related descriptions of the TCI state configuration information or the TCI UL state configuration information in step S1501, refer to the related descriptions of the TCI state configuration information in step S1201 above. Details are not described herein again.

Step S1502: The network device may send a MAC CE message and/or a DCI message to the terminal device. Correspondingly, the terminal device may receive the MAC CE message and/or the DCI message from the network device.

For an example of a structure of the MAC CE message in step S1502 and content included in the DCI message, refer to the related descriptions of step S1202 and step S1203. Details are not described herein again.

Step S1503: The network device may send a PDCCH to the terminal device. Correspondingly, the terminal device may receive the PDCCH from the network device.

The PDCCH in step S1503 may bear a UL grant (grant) that is used to schedule the PUSCH in step S1504.

Step S1504: The terminal device may send a PUSCH to the network device in an SBFD slot and/or a non-SBFD slot based on a QCL type and a CSI-RS. Correspondingly, the network device may receive the PUSCH from the terminal device in the SBFD slot and/or the non-SBFD slot based on the QCL type and the CSI-RS. The QCL type herein may be a QCL type D by default. To be specific, a spatial transmit parameter used to send the PUSCH is the same as a spatial receive parameter used to receive the CSI-RS. This is similar for another reference signal or SSB. Details are not described herein again.

The PUSCH whose transmission is performed in the SBFD slot in step S1504 is associated with a first TCI state corresponding to a value that is of a codepoint and that is included in the DCI message. The PUSCH whose transmission is performed in the non-SBFD slot in step S1504 is associated with a second TCI state corresponding to the value that is of the codepoint and that is included in the DCI message. The PUSCHs may be repeated. In other words, the PUSCH whose transmission is performed in the SBFD slot and the PUSCH whose transmission is performed in the non-SBFD slot may bear same information. Alternatively, the PUSCHs may be periodic. In other words, the PUSCH whose transmission is performed in the SBFD slot and the PUSCH whose transmission is performed in the non-SBFD slot may bear different information.

In FIG. 15, in a possible implementation, step S1501 and step S1502 may not be performed. The UL grant in step S1503 may include an identifier of an SRS associated with the PUSCH whose transmission is performed in the SBFD slot, and an identifier of another SRS associated with the PUSCH whose transmission is performed in the non-SBFD slot. Alternatively, the UL grant includes an SRS identifier, and the PUSCH is associated with a nearest SRS corresponding to the SRS identifier. The nearest SRS may be understood as an SRS that is before the PDCCH bearing the UL grant and is closest to the PDCCH and that is in a time unit of a same type as a time unit that the PUSCH is in.

Optionally, the first message further includes first indication information, and the first indication information indicates a type of a time unit that a reference signal is in. In this solution, the reference signal indicated by the first message may be simultaneously in different types of time units. For the foregoing problem 2, the first indication information may clearly indicate which type of time unit that the reference signal associated with the physical channel transmission is in.

In FIG. 15, if step S1501 and step S1502 are not performed, the first indication information may be included in the UL grant in step S1503.

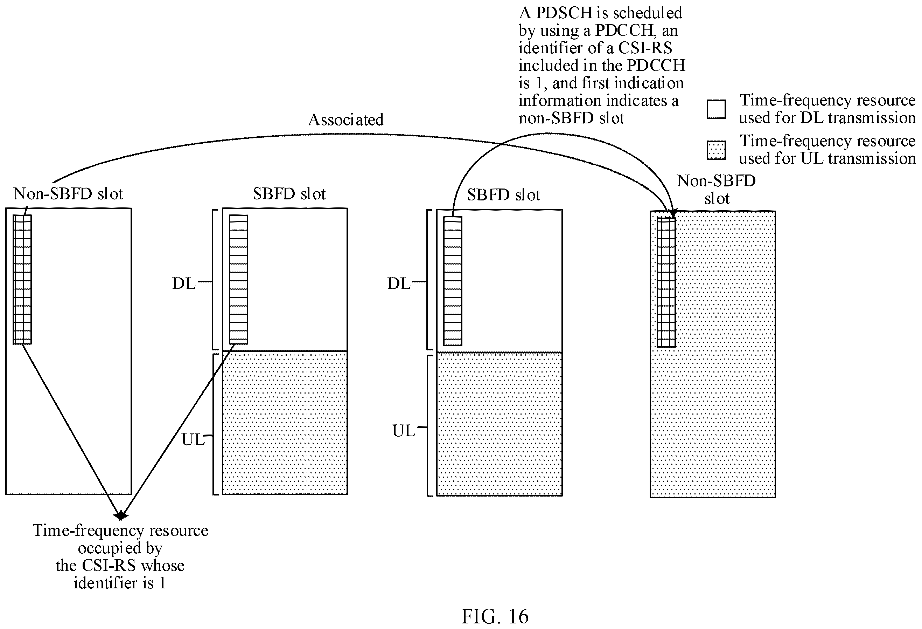

For example, the physical downlink channel is a PDSCH. FIG. 16 is a diagram of associating a physical channel with a reference signal. Slots of different types are associated with a same reference signal of a same type. Specifically, an SBFD slot and a non-SBFD slot are separately associated with a CSI-RS whose identifier is 1. In other words, the CSI-RS whose identifier is 1 may be in the non-SBFD slot, or may be in the SBFD slot. The first message may be a PDCCH, a PDSCH is scheduled by using the PDCCH, an identifier of a CSI-RS included in the PDCCH is 1, and the first indication information indicates the non-SBFD slot. In this case, the PDSCH may be associated with the CSI-RS whose identifier is 1 in the non-SBFD slot.

Optionally, the first indication information specifically indicates that the type of the time unit that the reference signal is in is the same as the type of the time unit for the physical channel transmission.

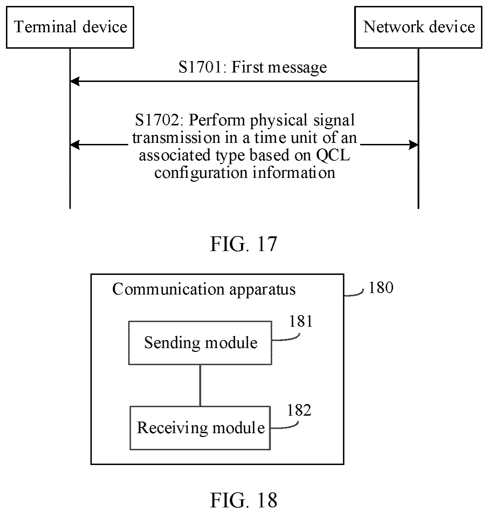

For example, the physical uplink channel is a PUSCH. The PUSCH may be associated with an SRS that is indicated in a UL grant, that is before a PDCCH bearing the UL grant and is closest to the PDCCH, and that is of a same slot type as the PUSCH. It is assumed that the UL grant indicates an SRS whose identifier is 1. When a slot used for PUSCH transmission is an SBFD slot, the PUSCH is associated with the SRS whose identifier is 1 in the SBFD slot; or when a slot used for PUSCH transmission is a non-SBFD slot, the PUSCH is associated with the SRS whose identifier is 1 in the non-SBFD slot. The foregoing describes the transmission indication method provided in embodiments of this application by using the physical channel transmission as an example. In a physical signal transmission scenario, FIG. 17 shows another transmission indication method according to an embodiment of this application.

Step S1701: A network device sends a first message to a terminal device, and the terminal device receives the first message from the network device.

The first message indicates QCL configuration information associated with a type of a time unit for physical signal transmission, the physical signal transmission includes at least one of transmission of a physical uplink signal and transmission of a physical downlink signal, and the type of the time unit includes a type used only for physical uplink transmission, a type used only for physical downlink transmission, and a type used for physical uplink transmission and physical downlink transmission.

Step S1702: The terminal device and the network device perform the physical signal transmission in the time unit of the associated type based on the QCL configuration information.

According to the related analysis of the embodiment shown in FIG. 7, the transmission indication method provided in embodiments of this application can improve performance of sending and receiving a physical signal by the terminal device and/or the network device. For a detailed description of the first message in step S1701, refer to the related descriptions of the embodiment shown in FIG. 7 above. Details are not described herein again.

Optionally, the network device sends second indication information to the terminal device. Correspondingly, the terminal device receives the second indication information from the network device. The second indication information indicates that physical signal transmission in different types of time units (for example, a time unit of a first type and a time unit of a second type) is performed through different antenna ports of the network device. For example, a physical signal may be a TRS. Because antenna ports used by the network device to send the TRS in different types of time units are different, the terminal device may receive the TRS on the different antenna ports by using different QCL configuration information, to improve time-frequency tracking performance of the terminal device.

In another implementation, the second indication information indicates that physical signal transmission in different types of time units is performed through a same antenna port of the network device, or the second indication information indicates that physical signals whose transmission is performed through a same antenna port of the network device are in time units of a same type, so that the terminal device can receive, by using same QCL configuration information, TRSs located on a same antenna port, to improve time-frequency tracking performance of the terminal device.

Optionally, it may be agreed in a protocol that physical signals whose transmission is performed through a same antenna port need to be located in time units of a same type. In other words, transmission of the physical signals whose transmission is performed through the same antenna port is not allowed to be performed in different types of time units.

In embodiments of this application, it may be agreed in a protocol that when a physical channel or a physical signal simultaneously occupies a plurality of types of symbols, a slot that the physical channel or the physical signal is in may be classified as a slot of a specific type in the plurality of types. For example, the physical channel is a PDCCH. When the PDCCH occupies both an SBFD symbol and a non-SBFD symbol, a slot that the PDCCH is in may be classified as an SBFD slot or a non-SBFD slot. Alternatively, which type of slot to which the slot that the physical channel or the physical signal simultaneously occupying the plurality of types of symbols is in belongs may be explicitly or implicitly indicated by signaling.

The actions of the terminal device in the foregoing embodiments may be performed by the terminal device instructed by the processor 1201 in the terminal device 120 shown in FIG. 6 by invoking the application program code stored in the memory 1202. The actions of the network device in the foregoing embodiments may be performed by the network device instructed by the processor 1101 in the network device 110 shown in FIG. 6 by invoking the application program code stored in the memory 1102. This is not limited in this embodiment.

It may be understood that, in the foregoing embodiments, the methods and/or the steps implemented by the terminal device may alternatively be implemented by a component (for example, a chip or a circuit) that may be used in a terminal device or a device including a terminal device; and the methods and/or the steps implemented by the network device may be implemented by a component (for example, a chip or a circuit) that may be used in a network device or a device including a network device.

It may be understood that, to implement the foregoing functions, the terminal device or the network device include corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules of the terminal device or the network device may be performed based on the foregoing method embodiments. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, the terminal device or the network device in embodiments of this application may be implemented in a form of a communication apparatus 180 shown in FIG. 18. The communication apparatus 180 includes a sending module 181 and a receiving module 182. The sending module 181 and/or the receiving module 182 may also be referred to as a transceiver unit configured to implement sending and receiving functions, for example, may be a transceiver circuit, a transceiver, or a communication interface.

For example, the communication apparatus 180 is the terminal device in the foregoing method embodiments.

The receiving module 182 is configured to receive a first message from a network device, where the first message indicates QCL configuration information associated with a type of a time unit for physical channel transmission, the physical channel transmission includes at least one of transmission of a physical uplink channel and transmission of a physical downlink channel, and the type of the time unit includes a type used only for physical uplink transmission, a type used only for physical downlink transmission, and a type used for physical uplink transmission and physical downlink transmission. The sending module 181 and/or the receiving module 182 are/is configured to perform the physical channel transmission in the time unit of the associated type based on the QCL configuration information.

In a possible implementation, the first message further indicates a reference signal associated with the QCL configuration information.

In a possible implementation, when the physical downlink channel is a PDCCH, the first message is a MAC layer message.

In a possible implementation, when the physical downlink channel is a PDSCH, or when the physical uplink channel is a PUSCH or a PUCCH, the first message is DCI; and the receiving module 182 is further configured to receive a second message from the network device, where the second message is used to configure a plurality of pieces of QCL configuration information based on the type of the time unit, and the first message specifically indicates, from the plurality of pieces of QCL configuration information, the QCL configuration information associated with the type of the time unit in which the physical channel transmission is currently performed.

In a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type.

In a possible implementation, the first message further includes first indication information, and the first indication information indicates a type of a time unit that the reference signal is in.

In a possible implementation, the first indication information specifically indicates that the type of the time unit that the reference signal is in is the same as the type of the time unit for the physical signal transmission.

The receiving module 182 is configured to receive a first message from a network device, where the first message indicates QCL configuration information associated with a type of a time unit for physical signal transmission, the physical signal transmission includes at least one of transmission of a physical uplink signal and transmission of a physical downlink signal, and the type of the time unit includes a type used only for physical uplink transmission, a type used only for physical downlink transmission, and a type used for physical uplink transmission and physical downlink transmission. The sending module 181 and/or the receiving module 182 are/is configured to perform the physical signal transmission in the time unit of the associated type based on the QCL configuration information.

In a possible implementation, the receiving module 182 is further configured to receive second indication information from the network device, where the second indication information indicates that the physical signal transmission in different types of time units is performed through different antenna ports of the network device.

In a possible implementation, the first message further indicates a reference signal associated with the QCL configuration information.

In a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type.

In a possible implementation, the first message further includes first indication information, and the first indication information indicates a type of a time unit that the reference signal is in.

In a possible implementation, the first indication information specifically indicates that the type of the time unit that the reference signal is in is the same as the type of the time unit for the physical signal transmission.

For example, the communication apparatus 180 is the network device in the foregoing method embodiments.

The sending module 181 is configured to send a first message to a terminal device, where the first message indicates QCL configuration information associated with a type of a time unit for physical channel transmission, the physical channel transmission includes at least one of transmission of a physical uplink channel and transmission of a physical downlink channel, and the type of the time unit includes a type used only for physical uplink transmission, a type used only for physical downlink transmission, and a type used for physical uplink transmission and physical downlink transmission. The sending module 181 and/or the receiving module 182 are/is configured to perform the physical channel transmission in the time unit of the associated type based on the QCL configuration information.

In a possible implementation, the first message further indicates a reference signal associated with the QCL configuration information.

In a possible implementation, when the physical downlink channel is a PDCCH, the first message is a MAC layer message.

In a possible implementation, when the physical downlink channel is a PDSCH, or when the physical uplink channel is a PUSCH or a PUCCH, the first message is DCI; and the sending module 181 is further configured to send a second message to the terminal device, where the second message is used to configure a plurality of pieces of QCL configuration information based on the type of the time unit, and the first message specifically indicates, from the plurality of pieces of QCL configuration information, the QCL configuration information associated with the type of the time unit in which the physical channel transmission is currently performed.

In a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type.

In a possible implementation, the first message further includes first indication information, and the first indication information indicates a type of a time unit that the reference signal is in.

In a possible implementation, the first indication information specifically indicates that the type of the time unit that the reference signal is in is the same as the type of the time unit for the physical channel transmission.

The sending module 181 is configured to send a first message to a terminal device, where the first message indicates QCL configuration information associated with a type of a time unit for physical signal transmission, the physical signal transmission includes at least one of transmission of a physical uplink signal and transmission of a physical downlink signal, and the type of the time unit includes a type used only for physical uplink transmission, a type used only for physical downlink transmission, and a type used for physical uplink transmission and physical downlink transmission. The sending module 181 and/or the receiving module 182 are/is configured to perform the physical signal transmission in the time unit of the associated type based on the QCL configuration information.

In a possible implementation, the sending module 181 is further configured to send second indication information to the terminal device, where the second indication information indicates that the physical signal transmission in different types of time units is performed through different antenna ports of the network device.

In a possible implementation, the first message further indicates a reference signal associated with the QCL configuration information.

In a possible implementation, the time unit is a slot, a symbol, or a subframe; the type used only for physical uplink transmission or the type used only for physical downlink transmission is a first type; the type used for physical uplink transmission and physical downlink transmission is a second type; and a slot of the first type includes a symbol of the first type, and a slot of the second type includes a symbol of the second type; or a slot of the first type includes a symbol of the first type and a symbol of the second type, or a slot of the second type includes a symbol of the first type and a symbol of the second type.

In a possible implementation, the first message further includes first indication information, and the first indication information indicates a type of a time unit that the reference signal is in.

In a possible implementation, the first indication information specifically indicates that the type of the time unit that the reference signal is in is the same as the type of the time unit for the physical signal transmission.

All related content of the steps in the foregoing method embodiments may be cited in function descriptions of the corresponding functional modules. Details are not described herein again.

In this embodiment, the communication apparatus 180 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions.

When the communication apparatus 180 is the terminal device in the foregoing method embodiments, in a simple embodiment, a person skilled in the art may figure out that the communication apparatus 180 may be in a form of the terminal device 120 shown in FIG. 6.

For example, the processor 1201 in the terminal device 120 shown in FIG. 6 may invoke the computer-executable instructions stored in the memory 1202, to cause the terminal device 120 to perform the transmission indication methods in the foregoing method embodiments. Specifically, functions/implementation processes of the sending module 181 and/or the receiving module 182 in FIG. 18 may be implemented by using the transceiver 1203 shown in FIG. 6.

Alternatively, when the communication apparatus 180 is the network device in the foregoing method embodiments, in a simple embodiment, a person skilled in the art may figure out that the communication apparatus 180 may be in a form of the network device 110 shown in FIG. 6.

For example, the processor 1101 in the network device 110 shown in FIG. 6 may invoke computer-executable instructions stored in the memory 1102, to cause the network device 110 to perform the transmission indication methods in the foregoing method embodiments. Specifically, functions/implementation processes of the sending module 181 and/or the receiving module 182 in FIG. 18 may be implemented by using the transceiver 1103 shown in FIG. 6.

Because the communication apparatus 180 provided in this embodiment may perform the foregoing transmission indication methods, for technical effects that can be obtained by the communication apparatus 180, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in a form of a computer program instruction, and is stored in the memory. A processor may be configured to execute the program instruction and implement the foregoing method procedure. The processor may be built in a SoC (system on chip) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory through the interface, and when the at least one processor executes a computer program or instructions in the memory, the method in any one of the foregoing method embodiments is performed. In a possible implementation, a first device further includes the memory. Optionally, the chip system may include a chip, or may include a chip and another discrete device. This is not specifically limited in embodiments of this application.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions described in embodiments of this application are produced. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. In this case, this application is intended to cover these modifications and variations of this application provided that they fall within the scope of protection defined by the following claims and their equivalent technologies.

## Claims

1. A transmission indication method, comprising:
receiving, by a terminal device, a first message from a network device, wherein the first message indicates quasi co-location QCL configuration information associated with a type of a time unit for physical channel transmission, the physical channel transmission comprises at least one of transmission of a physical uplink channel and transmission of a physical downlink channel, and the type of the time unit comprises a type used only for physical uplink transmission, a type used only for physical downlink transmission, and a type used for physical uplink transmission and physical downlink transmission; and
performing, by the terminal device, the physical channel transmission in the time unit of the associated type based on the QCL configuration information.

2. The method according to claim 1, wherein the first message further indicates a reference signal associated with the QCL configuration information.

3. The method according to claim 1 or 2, wherein when the physical downlink channel is a physical downlink control channel PDCCH, the first message is a medium access control MAC layer message.

4. The method according to claim 1 or 2, wherein when the physical downlink channel is a physical downlink shared channel PDSCH, or when the physical uplink channel is a physical uplink shared channel PUSCH or a physical uplink control channel PUCCH, the first message is downlink control information DCI; and the method further comprises:
receiving, by the terminal device, a second message from the network device, wherein
the second message is used to configure a plurality of pieces of QCL configuration information based on the type of the time unit, and the first message specifically indicates, from the plurality of pieces of QCL configuration information, the QCL configuration information associated with the type of the time unit in which the physical channel transmission is currently performed.

5. The method according to any one of claims 1 to 4, wherein the time unit is a slot, a symbol, or a subframe; the type used only for physical uplink transmission or the type used only for physical downlink transmission is a first type; the type used for physical uplink transmission and physical downlink transmission is a second type; and a slot of the first type comprises a symbol of the first type, and a slot of the second type comprises a symbol of the second type; or a slot of the first type comprises a symbol of the first type and a symbol of the second type, or a slot of the second type comprises a symbol of the first type and a symbol of the second type.

6. The method according to claim 2, wherein the first message further comprises first indication information, and the first indication information indicates a type of a time unit that the reference signal is in.

7. The method according to claim 6, wherein the first indication information specifically indicates that the type of the time unit that the reference signal is in is the same as the type of the time unit for the physical channel transmission.

8. A transmission indication method, comprising:
receiving, by a terminal device, a first message from a network device, wherein the first message indicates quasi co-location QCL configuration information associated with a type of a time unit for physical signal transmission, the physical signal transmission comprises at least one of transmission of a physical uplink signal and transmission of a physical downlink signal, and the type of the time unit comprises a type used only for physical uplink transmission, a type used only for physical downlink transmission, and a type used for physical uplink transmission and physical downlink transmission; and
performing, by the terminal device, the physical signal transmission in the time unit of the associated type based on the QCL configuration information.

9. The method according to claim 8, wherein the method further comprises:
receiving, by the terminal device, second indication information from the network device, wherein the second indication information indicates that the physical signal transmission in different types of time units is performed through different antenna ports of the network device.

10. The method according to claim 8 or 9, wherein the first message further indicates a reference signal associated with the QCL configuration information.

11. The method according to any one of claims 8 to 10, wherein the time unit is a slot, a symbol, or a subframe; the type used only for physical uplink transmission or the type used only for physical downlink transmission is a first type; the type used for physical uplink transmission and physical downlink transmission is a second type; and a slot of the first type comprises a symbol of the first type, and a slot of the second type comprises a symbol of the second type; or a slot of the first type comprises a symbol of the first type and a symbol of the second type, or a slot of the second type comprises a symbol of the first type and a symbol of the second type.

12. The method according to claim 10, wherein the first message further comprises first indication information, and the first indication information indicates a type of a time unit that the reference signal is in.

13. The method according to claim 12, wherein the first indication information specifically indicates that the type of the time unit that the reference signal is in is the same as the type of the time unit for the physical signal transmission.

14. A transmission indication method, comprising:
sending, by a network device, a first message to a terminal device, wherein the first message indicates quasi co-location QCL configuration information associated with a type of a time unit for physical channel transmission, the physical channel transmission comprises at least one of transmission of a physical uplink channel and transmission of a physical downlink channel, and the type of the time unit comprises a type used only for physical uplink transmission, a type used only for physical downlink transmission, and a type used for physical uplink transmission and physical downlink transmission; and
performing, by the network device, the physical channel transmission in the time unit of the associated type based on the QCL configuration information.

15. The method according to claim 14, wherein the first message further indicates a reference signal associated with the QCL configuration information.

16. The method according to claim 14 or 15, wherein when the physical downlink channel is a physical downlink control channel PDCCH, the first message is a medium access control MAC layer message.

17. The method according to claim 14 or 15, wherein when the physical downlink channel is a physical downlink shared channel PDSCH, or when the physical uplink channel is a physical uplink shared channel PUSCH or a physical uplink control channel PUCCH, the first message is downlink control information DCI; and the method further comprises:
sending, by the network device, a second message to the terminal device, wherein
the second message is used to configure a plurality of pieces of QCL configuration information based on the type of the time unit, and the first message specifically indicates, from the plurality of pieces of QCL configuration information, the QCL configuration information associated with the type of the time unit in which the physical channel transmission is currently performed.

18. The method according to any one of claims 14 to 17, wherein the time unit is a slot, a symbol, or a subframe; the type used only for physical uplink transmission or the type used only for physical downlink transmission is a first type; the type used for physical uplink transmission and physical downlink transmission is a second type; and a slot of the first type comprises a symbol of the first type, and a slot of the second type comprises a symbol of the second type; or a slot of the first type comprises a symbol of the first type and a symbol of the second type, or a slot of the second type comprises a symbol of the first type and a symbol of the second type.

19. The method according to claim 15, wherein the first message further comprises first indication information, and the first indication information indicates a type of a time unit that the reference signal is in.

20. The method according to claim 19, wherein the first indication information specifically indicates that the type of the time unit that the reference signal is in is the same as the type of the time unit for the physical channel transmission.

21. A transmission indication method, comprising:
sending, by a network device, a first message to a terminal device, wherein the first message indicates quasi co-location QCL configuration information associated with a type of a time unit for physical signal transmission, the physical signal transmission comprises at least one of transmission of a physical uplink signal and transmission of a physical downlink signal, and the type of the time unit comprises a type used only for physical uplink transmission, a type used only for physical downlink transmission, and a type used for physical uplink transmission and physical downlink transmission; and
performing, by the network device, the physical signal transmission in the time unit of the associated type based on the QCL configuration information.

22. The method according to claim 21, wherein the method further comprises:
sending, by the network device, second indication information to the terminal device, wherein the second indication information indicates that the physical signal transmission in different types of time units is performed through different antenna ports of the network device.

23. The method according to claim 21 or 22, wherein the first message further indicates a reference signal associated with the QCL configuration information.

24. The method according to any one of claims 21 to 23, wherein the time unit is a slot, a symbol, or a subframe; the type used only for physical uplink transmission or the type used only for physical downlink transmission is a first type; the type used for physical uplink transmission and physical downlink transmission is a second type; and a slot of the first type comprises a symbol of the first type, and a slot of the second type comprises a symbol of the second type; or a slot of the first type comprises a symbol of the first type and a symbol of the second type, or a slot of the second type comprises a symbol of the first type and a symbol of the second type.

25. The method according to claim 23, wherein the first message further comprises first indication information, and the first indication information indicates a type of a time unit that the reference signal is in.

26. The method according to claim 25, wherein the first indication information specifically indicates that the type of the time unit that the reference signal is in is the same as the type of the time unit for the physical signal transmission.

27. A communication apparatus, wherein the communication apparatus comprises: modules or units configured to implement the method according to any one of claims 1 to 7, modules or units configured to implement the method according to any one of claims 8 to 13, modules or units configured to implement the method according to any one of claims 14 to 20, or modules or units configured to implement the method according to any one of claims 21 to 26.

28. A communication apparatus, comprising a memory and a processor coupled to the memory, wherein the memory is configured to store a program, the processor is configured to execute the program stored in the memory, and when the communication apparatus runs, the processor runs the program, to cause the communication apparatus to perform the method according to any one of claims 1 to 7, cause the communication apparatus to perform the method according to any one of claims 8 to 13, cause the communication apparatus to perform the method according to any one of claims 14 to 20, or cause the communication apparatus to perform the method according to any one of claims 21 to 26.

29. A communication system, wherein the communication system comprises a terminal device and a network device, wherein the terminal device is configured to perform the method according to any one of claims 1 to 7, and the network device is configured to perform the method according to any one of claims 14 to 20; or the terminal device is configured to perform the method according to any one of claims 8 to 13, and the network device is configured to perform the method according to any one of claims 21 to 26.

30. A computer-readable storage medium, storing a computer program, wherein when the computer program is executed by a computer, the computer is caused to perform the method according to any one of claims 1 to 7; when the computer program is executed by a computer, the computer is caused to perform the method according to any one of claims 8 to 13; when the computer program is executed by a computer, the computer is caused to perform the method according to any one of claims 14 to 20; or when the computer program is executed by a computer, the computer is caused to perform the method according to any one of claims 21 to 26.
